# EUROPÄISCHE PATENTANMELDUNG

(11) **EP 4 582 360 A1**
(43) Veröffentlichungstag der Anmeldung: **09.07.2025**
(21) Anmeldenummer: 25150031.0
(22) Anmeldetag: 02.01.2025
(51) Int. Cl.: B65G 47/52, B65G 47/57, B65G 47/66

(54) **TRANSPORTSTRECKE UND VERFAHREN ZUR BEFÖRDERUNG VON STÜCKGÜTERN**

(30) Priorität: 03.01.2024 DE 102024100127
(71) Anmelder: Krones Aktiengesellschaft, 93073 Neutraubling (DE)
(72) Erfinder: CANALICCHIO, Christian, 93073 Neutraubling (DE); FECHTER, Wolfgang, 93073 Neutraubling (DE); GABLER, Markus, 93073 Neutraubling (DE); MAYER, Thomas-Florian, 93073 Neutraubling (DE); PRINZ, Markus, 93073 Neutraubling (DE); SPINDLER, Herbert, 93073 Neutraubling (DE)
(74) Vertreter: Benninger Patentanwaltskanzlei

(57) **Zusammenfassung**

Mit der Erfindung wird eine Transportstrecke (14) mit mindestens zwei sich in einer Förderrichtung (12) aneinander anschließenden Transportabschnitten (16, 18) offenbart. Die Transportabschnitte (16, 18) stellen jeweils sich in Förderrichtung (12) bewegende Auflageebenen (22, 24) für Stückgüter (10) bereit. Die Auflageebenen (22, 24) schließen sich zumindest in Nahbereichen eines Anschlusses zwischen den Transportabschnitten (16, 18) unter Ausbildung eines überstumpfen Winkels mit einem Wert größer als 180° aneinander an.

Zudem wird mit der Erfindung ein Verfahren (100) zur Beförderung von Stückgütern (10) mittels mindestens zweier sich in einer Förderrichtung (12) aneinander anschließenden Transportabschnitten (16, 18) offenbart, auf welchen Transportabschnitten (16, 18) die Stückgüter (10) jeweils auf sich in Förderrichtung (12) bewegenden Auflageebenen (22, 24) befördert werden. Die Stückgüter (10) treten vom ersten Transportabschnitt (16) unter Ausführung einer Nickbewegung auf den sich an den ersten Transportabschnitt (16) unter Ausbildung eines überstumpfen Winkels anschließenden zweiten Transportabschnitt (18) über.

## Beschreibung

Die vorliegende Erfindung betrifft eine Transportstrecke mit mindestens zwei sich in einer Förderrichtung aneinander anschließenden Transportabschnitten, die jeweils sich in Förderrichtung bewegende Auflageebenen für Stückgüter bereitstellen. Zudem betrifft die Erfindung ein Verfahren zur Beförderung von Stückgütern mittels mindestens zweier sich in einer Förderrichtung aneinander anschließenden Transportabschnitten. Außerdem betrifft die Erfindung ein System, umfassend eine solche Transportstrecke und sich daran anschließende weitere Komponenten.

Im Zusammenhang mit der Verarbeitung und Handhabung von Verpackungseinheiten oder Gebinden, die insbesondere mehrere zusammengefasste Artikel enthalten können, werden diese über unterschiedliche Transportabschnitte befördert. Um definierte Lücken zwischen den einzelnen Verpackungseinheiten in einen stetig geförderten Gebindestrom zu erzeugen, was etwa dann notwendig sein kann, wenn die Verpackungseinheiten von einer Horizontalfördereinrichtung auf eine Gleitebene zur geschobenen Beförderung mittels Schubstangen übertreten sollen, ist es bekannt, die Verpackungseinheiten auf Förderbänder zu befördern, die den Verpackungseinheiten unterschiedliche Fördergeschwindigkeiten aufprägen.

Um etwa in einen lückenlosen Gebindestrom Lücken zwischen zwei Gebinden oder Verpackungseinheiten zu erzeugen, können zwei aufeinanderfolgende Förderbänder eingesetzt werden. Das erste Förderband kann als Stoppband betrachtet werden, auf dem die Gebinde oder Verpackungseinheiten mit kontinuierlicher Geschwindigkeit heranbefördert werden. Vom Stoppband werden die Gebinde an ein sich anschließendes Beschleunigungsband übergeben, das mit einer schnelleren Fördergeschwindigkeit betrieben wird als das Stoppband.

Sobald eine Reibung zwischen den zu befördernden Gebinden und dem Beschleunigungsband größer ist als zwischen dem Gebinde und dem Stoppband, wird das Gebinde vom Beschleunigungsband mitgezogen und dabei beschleunigt. Durch die höhere Fördergeschwindigkeit des Beschleunigungsbandes entstehen Lücken zwischen den jeweils vom Beschleunigungsband mitgezogenen Gebinden und dem jeweils nachfolgenden Gebindestrom. Diese Lücken sind erwünscht, um bspw. mit Schubstangen oder Schubfingern zwischen die Gebinde eingreifen und diese schiebend weiterzubefördern.

Allerdings werden die exakten Dimensionen der solchermaßen hergestellten Lücken zwischen den aufeinanderfolgend transportierten Gebinden oder Verpackungseinheiten von den jeweils herrschenden Reibungsbedingungen zwischen den Gebinden und den Förderbändern beeinflusst. Da sich die Reibungsverhältnisse ändern können, bspw. durch Feuchtigkeit auf den Bändern, lassen sich oftmals die Lücken nicht so genau einstellen, wie dies im Einzelfall gewünscht sein kann.

Auch Abnutzungseffekte und Verschleißerscheinungen bei den Förderbändern sind geeignet, die Reibungsverhältnisse zu ändern.

Die unvermeidlichen Schlupfbewegungen, die bei diesen Übertritten vom Stoppband auf das Beschleunigungsband auftreten, sorgen für erhöhten Verschleiß. Insbesondere gummierte Transportbänder nutzen hierdurch schneller ab und müssen ausgetauscht werden.

Im ungünstigsten Fall treffen die Schubstangen oder Schubfinger, die rückseitig an die Gebinde angreifen sollen, nicht in die Lücken zwischen den Gebinden, sondern können mit den Gebinden kollidieren.

Das vorrangige Ziel der vorliegenden Erfindung kann darin gesehen werden, im Zusammenhang mit dem Transport von Stückgütern definierte Lücken zwischen den hintereinander beförderten Stückgütern zu erzeugen, was mit einer entsprechend ausgestalteten und ausgestatteten Transportstrecke sowie mit einem entsprechend konfigurierten Förderverfahren ermöglicht werden soll.

Dieses Ziel der Erfindung wird mit den Gegenständen der unabhängigen Ansprüche erreicht. Merkmale vorteilhafter Weiterbildungen der Erfindung lassen sich den jeweiligen abhängigen Ansprüchen entnehmen.

Zur Erreichung des genannten Ziels schlägt die Erfindung eine Transportstrecke mit mindestens zwei sich in einer Förderrichtung aneinander anschließenden Transportabschnitten vor, die jeweils sich in Förderrichtung bewegende Auflageebenen für Stückgüter bereitstellen. Die Auflageebenen schließen sich zumindest in Nahbereichen eines Anschlusses zwischen den Transportabschnitten unter Ausbildung eines überstumpfen Winkels mit einem Wert größer als 180° aneinander an.

Bei der Transportstrecke kann eine erste Auflageebene des ersten Transportabschnittes eine Steigung gegenüber einer Horizontalen aufweisen, wobei diese Steigung in Förderrichtung gemeint ist, die erste Auflageebene also in Förderrichtung zumindest geringfügig ansteigt.

Wahlweise kann die Transportstrecke auch in einer Weise ausgestaltet sein, dass die erste Auflageebene des ersten Transportabschnittes in etwa horizontal ausgerichtet ist.

Weiterhin kann bei der Transportstrecke eine zweite Auflageebene des sich an den ersten Transportabschnitt in Förderrichtung anschließenden zweiten Transportabschnittes ein Gefälle gegenüber einer Horizontalen aufweisen.

Der Neigungswinkel zwischen den aufeinanderfolgenden Auflageebenen kann bspw. 181° oder geringfügig mehr als 181° betragen. Sinnvolle Winkel können bspw. auch zwischen 181° und etwa 185° liegen.

Darüber hinaus ist es auch möglich und von der vorliegenden Erfindung mitumfasst, dass die erste Transportstrecke mit der ersten Auflageebene eine leichte Steigung aufweist, während die sich daran anschließende zweite Transportstrecke mit der zweiten Auflageebene keine Steigung und kein Gefälle aufweist, d.h. horizontal geführt ist. Die sich dran anschließende dritte Transportstrecke mit der dritten Auflageebene kann wiederum vorzugsweise horizontal ausgerichtet sein. Auch in einem solchen Fall bildet sich zwischen den ersten und zweiten Transportstrecken der erwähnte überstumpfe Winkel β (> 180°) aus, während zwischen den jeweiligen Auflageebene der zweiten und dritten Transportstrecken ein gerader Winkel von etwa 180° liegt, weil dort keine winkelige Anstellung vorgesehen ist.

Zudem kann bei der Transportstrecke vorzugsweise vorgesehen sein, dass die erste Auflageebene des ersten Transportabschnittes mit einer ersten Fördergeschwindigkeit in Förderrichtung bewegt wird, und dass die zweite Auflageebene des zweiten Transportabschnittes mit einer zweiten Fördergeschwindigkeit in Förderrichtung bewegt wird. Die zweite Fördergeschwindigkeit ist dabei größer ist als die erste Fördergeschwindigkeit.

Ein Betrag der zweiten Fördergeschwindigkeit kann insbesondere in etwa 105% bis 120% des Betrags der ersten Fördergeschwindigkeit entsprechen. Bevorzugt kann vorgesehen sein, dass die zweite Fördergeschwindigkeit einen Wert von etwa 110% der ersten Fördergeschwindigkeit hat.

Je nach dem gewünschtem oder benötigten Ausmaß der Stückgutbeschleunigung mittels des als Beschleunigungsstrecke fungierenden zweiten Transportabschnittes kann die zweite Fördergeschwindigkeit der zweiten Auflageebene des zweiten Transportabschnittes somit um mindestens 10% größer sein als die erste Fördergeschwindigkeit, wobei auch eine Geschwindigkeitszunahme um etwa 20% oder geringfügig mehr sinnvoll und in der Praxis realisierbar sein kann.

Durch die beschriebene Konfiguration mit den gegenüber in überstumpfem Winkel geneigten Transportabschnitte sowie der unterschiedlichen Fördergeschwindigkeiten ist es effektiv möglich, die auf der Transportstrecke beförderten Stückgüter präzise voneinander zu beabstanden und nach der Beabstandung vorzugsweise in definierten Abständen zueinander in Förderrichtung weiterzubefördern. Sofern die Stückgüter bereits voneinander beabstandet sind und in Abständen auf dem ersten Transportabschnitt befördert werden, so ermöglicht es die erfindungsgemäße Transportstrecke, die Abstände der Stückgüter voneinander zu vergrößern und diese vergrößerten Abstände möglichst präzise vorzugeben und einzuhalten.

Die Auflageebenen der entsprechenden Transportabschnitte können bspw. durch endlos umlaufende Mattenförderer o. dgl. gebildet und bereitgestellt sein, die typischerweise jeweils über zwei Umlenkrollen geführt und elektromotorisch oder wahlweise auch über hydraulische Antriebsmotoren oder auf andere Weise angetrieben sein können. Wahlweise kann es sich bei den umlaufenden Auflageebenen auch um endlos umlaufende Gliederketten handeln. Wahlweise können die umlaufenden Auflageebenen auch durch ausreichend breite Kautschuk- oder Gewebebänder o. dgl. gebildet sein. Besonders mit Kautschuk- oder Elastomermaterial belegte Auflageebenen bieten vergleichsweise hohe Haftreibungswerte, so dass die Stückgüter präzise befördert und insbesondere beim Übertritt auf den schneller laufenden zweiten Transportabschnitt in präziser und exakt steuerbarer Weise beschleunigt werden.

Das oberseitige Zugtrum jedes Transportabschnittes stellt dabei jeweils die entsprechende Auflageebene für den Transport der Stückgüter in Transport- oder Förderrichtung zur Verfügung, während das unterseitige Leertrum des jeweiligen Transportabschnittes in Gegenrichtung leer zurückläuft.

Auf der erfindungsgemäßen Transportstrecke werden die Stückgüter zunächst auf der ersten Auflageebene des ersten Transportabschnittes in Förderrichtung bewegt und danach auf die sich daran anschließende zweite Auflageebene des zweiten Transportabschnittes übergeben. Die Stückgüter führen bei ihrem Übertritt vom ersten Transportabschnitt auf den zweiten Transportabschnitt eine Nickbewegung aus, d.h. eine Kippbewegung um die jeweilige Querachse des betreffenden Stückgutes. Auf diese Weise können die Stückgüter bei unterschiedlichen Fördergeschwindigkeiten der aufeinanderfolgenden Transportabschnitte besonders schonend und unter weitgehender Vermeidung von unerwünschten und nur schwer kontrollierbaren und reproduzierbaren Reibungs- und/oder Schlupfeffekten von der ersten Auflageebene auf die zweite Auflageebene übertreten.

Diese Nickbewegungen können dadurch erreicht werden, dass die beiden Auflageebenen nicht exakt in einer gemeinsamen horizontalen Ebene liegen, sondern dass sie in einem überstumpfen Winkel aneinandergrenzen, was die übertretenden Stückgüter in eine Kippbewegung zwingt.

Der besondere Vorteil der erzwungenen Nickbewegungen der vom ersten Transportabschnitt auf den zweiten Transportabschnitt übertretenden Stückgüter besteht in den dadurch vermiedenen Schlupfeffekten, wenn der zweite Transportabschnitt als Beschleunigungsstrecke dienen soll. Mit dem als Beschleunigungsstrecke ausgebildeten zweiten Transportabschnitt werden die Stückgüter schneller weiterbefördert, als sie mittels des ersten Transportabschnittes heranbefördert werden. Dieser vorzugsweise langsamer als der zweite Transportabschnitt laufende erste Transportabschnitt kann somit auch als Verzögerungsstrecke betrachtet werden, zumindest in Bezug auf die sich unmittelbar daran anschließende Beschleunigungsstrecke des zweiten Transportabschnittes.

Diese Funktion einer Beschleunigungsstrecke kann insbesondere dafür genutzt werden, um bestehende Lücken zwischen aufeinanderfolgend auf der ersten Auflageebene der Transportstrecke heranbeförderten Stückgütern zu vergrößern.

Insbesondere jedoch kann die durch den zweiten Transportabschnitt realisierte Funktion der Beschleunigungsstrecke dafür genutzt werden, um lückenlos auf der ersten Auflageebene der Transportstrecke heranbeförderte Stückgüter mit definierten Lücken zu versehen, um bspw. mit Schubstangen oder anderen geeigneten Schubelementen zwischen die Stückgüter eingreifen zu können und diese unter rückseitiger Anlage der Schubstangen oder Schubelemente weiterzubefördern, etwa auf einer nicht angetriebenen Gleitebene.

Weiterhin kann bei der Transportstrecke vorgesehen sein, dass sich zwischen dem ersten Transportabschnitt und dem zweitem Transportabschnitt ein Gleitelement befindet, über das die Stückgüter bei ihrem jeweiligen Übertritt vom ersten Transportabschnitt auf den zweiten Transportabschnitt gleiten können.

Dieses Gleitelement kann in einer vorteilhaften Ausgestaltung der erfindungsgemäßen Transportstrecke insbesondere durch eine rotierbare Walze gebildet sein. Diese Walze ist vorzugsweise nicht angetrieben, sondern kann möglichst reibungsarm um eine Drehachse rotieren, die quer zur Förderrichtung unter mit einem Abstand von etwa dem Walzenradius unterhalb der ersten und/oder zweiten Auflageebene liegt. Somit können die Stückgüter ohne einen Absatz über die Walze gleiten, wenn sie von der ersten Auflageebene auf die zweite Auflageebene übertreten.

Die Walze oder das Gleitelement ermöglicht es, dass die jeweils vom ersten Transportabschnitt auf den zweiten Transportabschnitt übertretenden Stückgüter jeweils darüber abwälzen können, wodurch der jeweilige Nick- und Kippvorgang beim Übertreten auf die zweite Auflageebene des zweiten Transportabschnittes 18 weitgehend störungsfrei und ohne bremsende Reibungseffekte vonstattengehen kann.

Wenn sich ein Stückgut mittig auf dem Gleitelement oder der Walze befindet und sich dabei im Kippvorgang befindet, weil sich seine Unterseite bereits von der ersten Auflageebene gelöst, aber noch nicht die zweite Auflageebene erreicht hat, so kann es zunächst die Geschwindigkeit der ersten Auflageebene beibehalten. Sofern sich die Walze widerstandsarm oder weitgehend widerstandsfrei drehen lässt, kann der Übertritt der Stückgüter von der ersten Auflageebene auf die zweite Auflageebene störungsfrei und für alle Stückgüter gleichförmig erfolgen, wobei unmittelbar beim Kontakt des Stückgutes mit der zweiten Auflageebene die Beschleunigung auf die erhöhte zweite Fördergeschwindigkeit erfolgen kann, wenn nämlich der Kippvorgang abgeschlossen ist und das Stückgut mit seiner Unterseite auf der zweiten Auflageebene aufliegt

Bisher eingesetzte Beschleunigungsstrecken, bei denen die Stückgüter in horizontaler Richtung beschleunigt werden, ohne dass eine Nickbewegung erfolgt, können keine derart exakte Positionierung gewährleisten, da nicht bei jedem Übertritt eines Stückgutes jeweils zwangsläufig dieselben Reibungsbedingungen zwischen der Unterseite des mitgezogenen und beschleunigten Stückgutes und der Auflageebene der Beschleunigungsstrecke herrschen müssen, so dass Differenzen in den produzierten Lücken oder Beabstandungen zwischen den Stückgütern auftreten können.

Außerdem unterliegen solche horizontal gestreckten Beschleunigungsstrecken normalerweise einem erhöhten Verschleiß, da die Stückgüter während ihres Übertritts auf die Beschleunigungsstrecke sich noch teilweise auf dem langsamer laufenden vorgeordneten Förderband befinden, was zwangsläufig einen Schlupf bedeutet, der zu einem erhöhten Abrieb und Bandverschleiß nach längerer Betriebsdauer führen kann.

Dagegen führt bei der erfindungsgemäßen Transportstrecke jedes Stückgut beim Übertritt auf den zweiten Transportabschnitt die beschriebene Nickbewegung aus, was aufgrund der unterschiedlichen Steigungen der in Förderrichtung aneinander anschließenden ersten und zweiten Auflageebenen zu einem Ablösen des jeweiligen Stückgutes von der ersten Auflageebene führt, sobald sich sein Massenschwerpunkt über dem Spalt zwischen den angewinkelten Auflageebenen und oberhalb des Gleitelements oder der Walze befindet. Durch die Nickbewegung, womit die oben schon beschriebene Kippbewegung um eine Querachse des jeweiligen Stückgutes gemeint ist, berührt die Unterseite des Stückgutes erst dann die zweite Auflageebene, wenn sie sich bereits von der ersten Auflageebene abgelöst hat.

Sofern eine Walze als Gleitelement eingesetzt wird, kann sich die Walze wahlweise frei drehen, vorzugsweise möglichst widerstandsarm, oder ggf. auch angetrieben sein, wobei die sinnvolle Rotationsgeschwindigkeit einer angetriebenen Walze auf die erste Fördergeschwindigkeit des ersten Transportabschnittes abgestimmt ist und vorzugsweise mit dieser übereinstimmt. Ansonsten wären dort Geschwindigkeitsdifferenzen auszugleichen, was wiederum für einen Schlupf sorgen würde. Wenn die Walze sich dagegen weitgehend widerstandsfrei drehen kann, schwankt ihre Umdrehungsgeschwindigkeit mit der Beschleunigung des Stückgutes unmittelbar nach dessen Kippen auf die zweite Auflageebene und kann sich somit immer wieder an die sich verändernde Fördergeschwindigkeit des jeweils die Walze kontaktierenden und über die Walze abwälzenden Stückgutes anpassen.

Anstelle einer solchen Walze kann zur Überbrückung des Spaltes zwischen den aneinandergrenzenden Auflageebenen auch eine geeignete Gleitfläche vorgesehen sein, über welche die Stückgüter unter Ausführung der beschriebenen Nickbewegung um ihre Querachse hinweggleiten, um von der ersten Auflageebene auf die zweite Auflageebene zu gelangen, wo sie mit der erhöhten Fördergeschwindigkeit des zweiten Transportabschnittes und mit vergrößerten Zwischenräumen voneinander weiterbefördert werden.

Wahlweise kann sich bei der erfindungsgemäßen Transportstrecke an den zweiten Transportabschnitt in Förderrichtung ein dritter Transportabschnitt mit einer dritten Auflageebene zur Weiterbeförderung der Stückgüter anschließen. Diese dritte Auflageebene des dritten Transportabschnittes kann insbesondere horizontal ausgerichtet sein. Außerdem ist es von Vorteil, wenn sich die dritte Auflageebene mit einer dritten Fördergeschwindigkeit in Förderrichtung bewegt, welche dritte Fördergeschwindigkeit in etwa mit der zweiten Fördergeschwindigkeit übereinstimmt.

So kann die dritte Fördergeschwindigkeit der dritten Auflageebene des dritten Transportabschnittes sinnvollerweise der zweiten Fördergeschwindigkeit entsprechen, da beim Übergang der Stückgüter vom zweiten Transportabschnitt auf den dritten Transportabschnitt normalerweise keine Geschwindigkeitsänderung notwendig ist, denn die exakte Beabstandung der Stückgüter voneinander erfolgt mittels des als Beschleunigungsstrecke fungierenden zweiten Transportabschnittes, vorzugsweise jedoch nicht unter Nutzung einer nochmaligen Geschwindigkeitsdifferenz im dritten Transportabschnitt.

Darüber hinaus kann ein vierter Transportabschnitt vorgesehen sein, der sich an den dritten Transportabschnitt anschließt, oder in den der dritte Transportabschnitt übergeht. Dieser vierte Transportabschnitt kann insbesondere mit Schubelementen zur geschobenen Beförderung der Stückgüter ausgestattet sein, vorzugsweise zur weiteren horizontalen Beförderung der Stückgüter.

Die Lücken, welche zwischen den Stückgütern ausgebildet wurden, ermöglichen es normalerweise, dass Schubelemente rückseitig an die Stückgüter angreifen können, die bspw. im Bereich des dritten Transportabschnittes von einem Bereich unterhalb der Auflageebene auftauchen und jeweils rückseitig an einem der Stückgüter angreifen, um dieses nach Passieren des dritten Transportabschnittes z.B. über eine horizontale Förderebene schieben zu können. Diese Schubelemente können wahlweise dem dritten und/oder dem vierten Transportabschnitt zugeordnet sein.

Die bspw. als Schubfinger oder als Querbalken o. dgl. ausgebildeten Schubelemente können insbesondere an einer endlos umlaufenden Schubkette verankert sein, die für einen stetigen Vorschub der Schubelemente parallel zur Auflageebene des dritten Transportabschnittes und/oder darüber hinaus parallel entlang der horizontalen Förderebene des vierten Transportabschnittes (sofern vorhanden) sorgen kann, wobei die als Schubfinger ausgebildeten Schubelemente jeweils am Beginn des dritten Transportbandes aus ihrer versenkten Lage nach oben über die Transportebene hinausbewegt und in eine ungefähr senkrechte Position gebracht werden, die für ihre rückseitige Schiebebewegung der Stückgüter am günstigsten ist.

Die Förderebene des dritten und/oder des vierten Transportabschnittes kann bspw. in einer Handhabungseinrichtung münden, die für eine Übernahme der dort angelieferten Verpackungseinheiten mittels einer Greifeinrichtung und zur Stapelung, Palettierung oder anderweitigen Überführung in einen anderen Stapel- und/oder Verpackungszustand sorgen kann.

Sofern aus Sicht des angesprochenen Fachmannes sinnvoll miteinander kombinierbar, können einige der oder alle dieser zuvor genannten Variationen oder Ausführungsvarianten der erfindungsgemäßen Transportstrecke wahlweise auch miteinander kombiniert werden, um das oben formulierten Ziel zumindest teilweise zu erreichen, und/oder um den gewünschten Effekt der Erfindung zu erzielen.

Zur Erreichung des oben genannten Ziels schlägt die vorliegende Erfindung neben der in verschiedenen Ausführungsvarianten beschriebenen Transportstrecke weiterhin ein Verfahren zur Beförderung von Stückgütern mittels mindestens zweier sich in einer Förderrichtung aneinander anschließenden Transportabschnitten vor.

Auf den Transportabschnitten werden die Stückgüter jeweils auf sich in Förderrichtung bewegenden Auflageebenen befördert. Zudem treten die Stückgüter vom ersten Transportabschnitt unter Ausführung einer Nickbewegung auf den sich an den ersten Transportabschnitt unter Ausbildung eines überstumpfen Winkels anschließenden zweiten Transportabschnitt hinüber.

Bei dem Verfahren können die Stückgüter wahlweise auf der ansteigenden ersten Auflageebene des ersten Transportabschnittes transportiert werden, bevor sie an die abfallende zweite Auflageebene des zweiten Transportabschnittes übertreten.

Bei einer alternativen Verfahrensvariante können die Stückgüter auf der horizontal verlaufenden ersten Auflageebene des ersten Transportabschnittes transportiert werden, bevor sie an die abfallende zweite Auflageebene des zweiten Transportabschnittes übertreten.

Bei dem Verfahren kann weiterhin vorgesehen sein, dass die Stückgüter auf der ersten Auflageebene des ersten Transportabschnittes mit einer geringeren Fördergeschwindigkeit in Förderrichtung bewegt werden als auf der zweiten Auflageebene des zweiten Transportabschnittes.

So kann insbesondere vorgesehen sein, dass die zweite Fördergeschwindigkeit der zweiten Auflageebene in etwa 105% bis 120% des Betrags einer ersten Fördergeschwindigkeit der ersten Auflageebene entspricht, wobei die zweite Fördergeschwindigkeit insbesondere einen Wert von etwa 110% der ersten Fördergeschwindigkeit haben kann.

Weiterhin kann bei dem Verfahren vorgesehen sein, dass sich die Stückgüter beim Übertritt vom ersten Transportabschnitt auf den zweitem Transportabschnitt über ein Gleitelement bewegen, über das die Stückgüter bei ihrem jeweiligen Übertritt vom ersten Transportabschnitt auf den zweiten Transportabschnitt gleiten können.

Das Gleitelement kann insbesondere durch eine rotierbare Walze gebildet sein, wobei die Walze vorzugsweise passiv rotierbar, d.h. nicht motorisch angetrieben ist.

Außerdem kann das Verfahren vorsehen, dass die Stückgüter nach Passieren des zweiten Transportabschnittes auf einen dritten Transportabschnitt mit einer dritten Auflageebene übertreten, auf dem die Stückgüter weiterbefördert werden. Die dritte Auflageebene des dritten Transportabschnittes kann insbesondere horizontal ausgerichtet sein.

Die dritte Auflageebene kann sich insbesondere mit einer dritten Fördergeschwindigkeit bewegen, die in etwa mit der zweiten Fördergeschwindigkeit übereinstimmen kann. Wahlweise können die Stückgüter nach Passieren des dritten Transportabschnittes auf einen vierten Transportabschnitt übertreten, auf dem die Stückgüter mittels Schubelementen in geschobener Weise befördert werden können.

Sofern aus Sicht des angesprochenen Fachmannes sinnvoll miteinander kombinierbar, können einige der oder alle dieser zuvor genannten Variationen oder Ausführungsvarianten des erfindungsgemäßen Verfahrens wahlweise auch miteinander kombiniert werden, um das oben formulierten Ziel zumindest teilweise zu erreichen, und/oder um den gewünschten Effekt der Erfindung zu erzielen.

Die vorliegende Erfindung umfasst neben der erfindungsgemäßen Transportstrecke und neben dem erfindungsgemäßen Verfahren zur Beförderung von Stückgütern mittels mindestens zweier sich in einer Förderrichtung aneinander anschließenden Transportabschnitten weiterhin ein Gesamtsystem, das eine solche Transportstrecke und darüber hinaus mindestens einen Packer und/oder mindestens ein Gruppiersystem und/oder mindestens einen Palettierer umfasst.

Damit kann insbesondere gemeint sein, dass sich bei dem solchermaßen ausgestalteten System an die letzte Förderstrecke der erfindungsgemäßen Transportstrecke ein Packer anschließen kann, in dem die Stückgüter mit einer tertiären oder quartären Verpackung ausgestattet werden können, wobei in einer solchen tertiären oder quartären Verpackung insbesondere mehrere Stückgüter zusammengefasst und verpackt werden können.

Wahlweise kann damit auch gemeint sein, dass sich bei einem solchen System an die letzte Förderstrecke der erfindungsgemäßen Transportstrecke ein Gruppiersystem anschließen kann, in dem die Stückgüter erfasst, verschoben und/oder gedreht werden können, um bspw. für nachfolgende Verpackungs- und/oder Palettierprozesse in eine geänderte Anordnung gebracht zu werden, insbesondere in eine palettierfähige Lagenanordnung.

Schließlich kann damit auch gemeint sein, dass sich bei einem solchen System an die letzte Förderstrecke der erfindungsgemäßen Transportstrecke ein Palettierer anschließen kann, mit dem mehrere Stückgutlagen aufeinander abgelegt und übereinandergestapelt werden können.

Wie oben definiert, können der mindestens eine Packer und das mindestens eine Gruppiersystem gleichermaßen Teil des erfindungsgemäßen Systems sein. Wahlweise können auch der mindestens eine Packer und der mindestens eine Palettierer Teil des erfindungsgemäßen Systems sein. Zudem können wahlweise auch das mindestens eine Gruppiersystem und der mindestens eine Palettierer Bestandteile des erfindungsgemäßen Systems sein. Und schließlich können sowohl der mindestens eine Packer, das mindestens eine Gruppiersystem und der mindestens eine Palettierer allesamt Bestandteile des erfindungsgemäßen Systems sein.

Das solchermaßen definierte System kann sich insbesondere zur Durchführung eines Verfahrens gemäß einer der oben beschriebenen Ausführungsvarianten eignen, wobei die beförderten Stückgüter nach dem Passieren des oben erwähnten dritten Transportabschnittes oder eines sich daran anschließenden weiteren Transportabschnittes zu einem Packer und/oder zu einem Gruppiersystem und/oder zu einem Palettierer weiterbefördert werden können.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So sollen zunächst nochmals die grundlegenden Prinzipien des erfindungsgemäßen Verfahrens zur Beförderung von Stückgütern verdeutlicht werden. Das hier beschriebene Verfahren dient grundsätzlich der Beförderung von Stückgütern, die bspw. durch Verpackungseinheiten, durch Pakete, durch Gebinde oder durch andere Sekundär- oder Tertiärverpackungen gebildet sein können. Die in einer definierten Transportrichtung oder Förderrichtung beförderten Stückgüter weisen in der Regel eine flache Unterseite auf, wie dies bspw. bei Kartonverpackungen in Gestalt von Trays mit darin gehaltenen Getränkebehältern oder anderen Artikeln der Fall ist. Wahlweise können die Stückgüter auch durch Getränkekisten o. dgl. gebildet sein.

Eine wichtige Aufgabe des erfindungsgemäßen Förderverfahrens besteht darin, die Stückgüter voneinander zu beabstanden und nach erfolgter Beabstandung vorzugsweise in definierten Abständen zueinander in Förderrichtung weiterzubefördern. Sofern die Stückgüter bereits voneinander beabstandet sind, so besteht die vorrangige Aufgabe des erfindungsgemäßen Förderverfahrens darin, die Abstände der Stückgüter voneinander zu vergrößern und diese vergrößerten Abstände möglichst präzise vorzugeben und einzuhalten.

Das erfindungsgemäße Förderverfahren wird unter Einsatz und Verwendung einer Transportstrecke durchgeführt, bei der sich mehrere Transportabschnitte in Förderrichtung aneinander anschließen. Jeder der mehreren Transportabschnitte, die in Transport- oder Förderrichtung fluchtend hintereinander angeordnet sind, verfügt jeweils über eine Auflageebene, wobei der erste Transportabschnitt über eine erste Auflageebene verfügt. Der sich in Förderrichtung an den ersten Transportabschnitt anschließende zweite Transportabschnitt verfügt über eine zweite Auflageebene. Der sich in Förderrichtung an den zweiten Transportabschnitt anschließende dritte Transportabschnitt verfügt über eine dritte Auflageebene. Weitere Transportabschnitte können entsprechend dieser Systematik über weitere Auflageebenen verfügen.

Jede der Auflageebenen dient der Beförderung der Stückgüter in Förderrichtung. Die Auflageebenen der entsprechenden Transportabschnitte können insbesondere durch endlos umlaufende Mattenförderer o. dgl. gebildet und bereitgestellt sein, die jeweils über mindestens zwei entfernt voneinander angeordnete Umlenkrollen geführt und elektromotorisch oder wahlweise auch mittels hydraulischer Antriebsmotoren angetrieben sein können. Wahlweise kann es sich bei den umlaufenden Auflageebenen auch um endlos umlaufende Gliederketten handeln. Wahlweise können die umlaufenden Auflageebenen auch durch ausreichend breite Kautschuk- oder Gewebebänder o. dgl. gebildet sein.

Ein oberseitiges Zugtrum jedes Transportabschnittes stellt dabei jeweils die entsprechende Auflageebene für den Transport der Stückgüter in Transport- oder Förderrichtung zur Verfügung, während das unterseitige Leertrum des jeweiligen Transportabschnittes in Gegenrichtung leer zurückläuft.

Es sei allerdings schon an dieser Stelle betont, dass sich die vorliegende Erfindung im Wesentlichen auf die ersten beiden Transportabschnitt mit ihren zugehörigen Auflageebenen bezieht, während der dritte Transportabschnitt mit seiner dritten Auflageebene nicht in einem unmittelbaren Zusammenhang mit der erfindungsgemäßen Transportstrecke und mit dem erfindungsgemäße Förderverfahren steht, auch wenn der dritte Transportabschnitt für die Erfüllung der gewünschten Transportaufgaben der Transportstrecke sinnvoll oder notwendig ist, unabhängig von seiner konkreten Ausgestaltung.

Die Stückgüter werden bei ihrem Transport zunächst auf der ersten Auflageebene des ersten Transportabschnittes in Förderrichtung bewegt und danach auf die sich daran anschließende zweite Auflageebene des zweiten Transportabschnittes übergeben. Das erfindungsgemäße Verfahren sieht vor, dass die Stückgüter bei ihrem Übertritt vom ersten Transportabschnitt auf den zweiten Transportabschnitt eine Nickbewegung ausführen, d.h. eine Kippbewegung um eine jeweilige Querachse des betreffenden Stückgutes. Auf diese Weise können die Stückgüter bei unterschiedlichen Fördergeschwindigkeiten der aufeinanderfolgenden Transportabschnitte besonders schonend und unter weitgehender Vermeidung von unerwünschten und nur schwer kontrollierbaren und reproduzierbaren Reibungs- und/oder Schlupfeffekten von der ersten Auflageebene auf die zweite Auflageebene übertreten. Diese Nickbewegungen können dadurch erreicht werden, dass die beiden Auflageebenen nicht exakt in einer gemeinsamen horizontalen Ebene liegen, sondern dass sie in einem überstumpfen Winkel (α oder β) aneinandergrenzen, was die übertretenden Stückgüter in eine Kippbewegung zwingt.

Um einen solchen überstumpfen Winkel (α) zwischen den jeweiligen Auflageebenen der ersten bzw. zweiten Transportabschnitte auszubilden, kann bspw. der erste Transportabschnitt über eine geringfügige Steigung verfügen, was durch eine gegenüber der hinteren Umlenkung höherliegend angeordnete vordere Umlenkung realisiert sein kann, so dass auch die erste Auflageebene dieselbe Steigung beschreibt. Außerdem kann der zweite Transportabschnitt mit einem geringfügigen Gefälle versehen sein, was durch eine gegenüber der hinteren Umlenkung tieferliegend angeordneten vorderen Umlenkung realisiert ist, so dass auch die zweite Auflageebene dasselbe Gefälle beschreibt. Die in Förderrichtung gesehen vordere Umlenkung des ersten Transportabschnittes kann wahlweise auf demselben Höhenniveau liegen wie die hintere Umlenkung des zweiten Transportabschnittes.

Wahlweise kann bei einer Variante der Transportstrecke der erste Transportabschnitt horizontal ausgerichtet sein, während der sich in Förderrichtung daran anschließende zweite Transportabschnitt mit einem geringfügigen Gefälle versehen ist, was durch eine gegenüber der hinteren Umlenkung tieferliegend angeordnete vordere Umlenkung realisiert ist, so dass auch die zweite Auflageebene dasselbe Gefälle beschreibt. Die in Förderrichtung gesehen vordere Umlenkung des ersten Transportabschnittes kann sich dabei wiederum auf demselben Höhenniveau befinden wie die hintere Umlenkung des zweiten Transportabschnittes.

Bei diesen beiden beschriebenen Varianten kann der dritte Transportabschnitt jeweils eine horizontale dritte Auflageebene zur Verfügung stellen, was jedoch nicht als unabdingbares Merkmal zu verstehen ist. Der dritte Transportabschnitt, der der Weiterbeförderung der in definierte Abstände zueinander gebrachten Stückgüter dient, schließt sich ohne Ausbildung einer Stufe an den zweiten Transportabschnitt an, so dass von dort die Stückgüter störungs- und erschütterungsfrei unter Beibehaltung ihrer zuvor aufgeprägten Abstände voneinander übertreten und auf der dritten Auflageebene in derselben Fördergeschwindigkeit weiterbefördert werden können.

Der besondere Vorteil der solchermaßen erzwungenen Nickbewegungen der vom ersten Transportabschnitt auf den zweiten Transportabschnitt übertretenden Stückgüter besteht in den dadurch vermiedenen Schlupfeffekten, wenn der zweite Transportabschnitt als Beschleunigungsstrecke dienen soll. Mit dem als Beschleunigungsstrecke ausgebildeten zweiten Transportabschnitt werden die Stückgüter schneller weiterbefördert, als sie mittels des ersten Transportabschnittes heranbefördert werden. Dieser vorzugsweise langsamer als der zweite Transportabschnitt laufende erste Transportabschnitt kann somit auch als Verzögerungsstrecke betrachtet werden, zumindest in Bezug auf die sich unmittelbar daran anschließende Beschleunigungsstrecke des zweiten Transportabschnittes.

Diese Funktion einer Beschleunigungsstrecke kann insbesondere dafür genutzt werden, um bestehende Lücken zwischen aufeinanderfolgend auf der ersten Auflageebene der Transportstrecke heranbeförderten Stückgütern zu vergrößern. Insbesondere jedoch kann die durch den zweiten Transportabschnitt realisierte Funktion der Beschleunigungsstrecke dafür genutzt werden, um lückenlos auf der ersten Auflageebene der Transportstrecke heranbeförderte Stückgüter mit definierten Lücken zu versehen, um bspw. mit Schubstangen oder anderen geeigneten Schubelementen zwischen die Stückgüter eingreifen zu können und diese unter rückseitiger Anlage der Schubstangen oder Schubelemente weiterzubefördern, etwa auf einer nicht angetriebenen Gleitebene.

Allerdings kann die Hauptaufgabe solcher optionalen Schubstangen oder Schubelemente in einer exakten Positionsvorgabe für die Stückgüter in Förderrichtung gesehen werden, etwa um weitere Handhabungs- oder Behandlungsschritte mit dafür vorgesehenen Handhabungseinrichtungen oder Greifern an exakt vorgebbaren Positionen vornehmen zu können, was bspw. bei einer lückenlosen Beförderung auf einem entsprechend lang ausgebildeten Transportband nur mit erhöhtem Aufwand zu realisieren wäre, ggf. unter Zuhilfenahme von optischen Sensoreinrichtungen zur Positionsbestimmung der Stückgüter.

Um die Stückgüter beim Übertritt vom ersten Transportabschnitt auf den zweiten Transportabschnitt voneinander zu beabstanden oder um bestehende Lücken zwischen den auf dem ersten Transportabschnitt herantransportierten Stückgütern zu vergrößern, ist die zweite Fördergeschwindigkeit der zweiten Auflageebene des zweiten Transportabschnitts notwendigerweise größer als die erste Fördergeschwindigkeit der ersten Auflageebene des ersten Transportabschnittes.

Je nach dem im konkreten Anwendungsfall gewünschtem oder benötigten Ausmaß der Stückgutbeschleunigung mittels des als Beschleunigungsstrecke fungierenden zweiten Transportabschnittes kann die zweite Fördergeschwindigkeit der zweiten Auflageebene des zweiten Transportabschnittes bspw. um mindestens größer sein als die erste Fördergeschwindigkeit, wobei auch eine Geschwindigkeitszunahme um etwa oder geringfügig mehr sinnvoll und in der Praxis realisierbar sein kann.

Eine dritte Fördergeschwindigkeit der dritten Auflageebene des dritten Transportabschnittes kann sinnvollerweise der zweiten Fördergeschwindigkeit entsprechen, da beim Übergang der Stückgüter vom zweiten Transportabschnitt auf den dritten Transportabschnitt normalerweise keine Geschwindigkeitsänderung notwendig ist, denn die exakte Beabstandung der Stückgüter voneinander erfolgt mittels des als Beschleunigungsstrecke fungierenden zweiten Transportabschnittes, vorzugsweise jedoch nicht unter Nutzung einer nochmaligen Geschwindigkeitsdifferenz im dritten Transportabschnitt.

Zwischen der zweiten Auflageebene und der dritten Auflageebene kann ebenfalls ein stumpfer Winkel (δ) ausgebildet sein, der aufgrund des geringen Gefälles der zweiten Auflageebene und der horizontal ausgerichteten dritten Auflageebene sinnvollerweise etwas weniger als 180° betragen kann. Wenn für den ersten Transportabschnitt keine Steigung vorgesehen ist, sondern der erste Transportabschnitt horizontal verlaufen soll, kann der überstumpfe Winkel (β) etwas kleiner sein als der Winkel (α) bei ansteigendem erstem Transportabschnitt und abfallendem zweitem Transportabschnitt. In der Praxis dürfte es sinnvoll sein, für die Winkel (α bzw. β) nur wenig mehr als 180° vorzusehen, da damit bereits der angestrebte Zweck erzielt werden kann. So können die Winkel α und β bspw. 181° oder geringfügig mehr als 181° betragen. Sinnvolle Winkel α und β können bspw. auch zwischen 181° und etwa 185° liegen.

Außerdem kann eine Walze vorgesehen sein, die einen Spalt zwischen dem ersten Transportabschnitt und dem sich daran in Transportrichtung anschließenden zweiten Transportabschnitt ausfüllen kann, so dass das jeweils vom ersten Transportabschnitt auf den zweiten Transportabschnitt übertretende Stückgut darüber abwälzen kann, wodurch der Nick- und Kippvorgang beim Übertreten auf die zweite Auflageebene des zweiten Transportabschnittes weitgehend störungsfrei und ohne bremsende Reibungseffekte vonstattengehen kann.

Sobald sich ein Stückgut mittig auf dieser Walze befindet, befindet es sich auch im Kippvorgang, weil sich seine Unterseite bereits von der ersten Auflageebene gelöst, aber noch nicht die zweite Auflageebene erreicht hat. Sofern sich die Walze leicht und widerstandsarm oder weitgehend widerstandsfrei drehen lässt, kann der Übertritt der Stückgüter von der ersten Auflageebene auf die zweite Auflageebene sehr präzise und für alle Stückgüter gleichförmig erfolgen, wobei gleichzeitig die Beschleunigung auf die erhöhte zweite Fördergeschwindigkeit erfolgen kann, sobald der Kippvorgang abgeschlossen ist und das jeweilige Stückgut mit seiner Unterseite auf der zweiten Auflageebene aufliegt.

Der besondere Vorteil der erfindungsgemäß ausgestalteten Transportstrecke besteht darin, dass die Beschleunigung der Stückgüter auf die zweite Fördergeschwindigkeit der zweiten Auflageebene unter reproduzierbaren Bedingungen gewährleistet werden kann, während derartige Beschleunigungsstrecken, bei denen die Stückgüter in horizontaler Richtung beschleunigt werden, ohne dass eine Nickbewegung erfolgt, keine exakte Positionierung gewährleisten können, da nicht bei jedem Übertritt eines Stückgutes jeweils zwangsläufig dieselben Reibungsbedingungen zwischen der Unterseite des mitgezogenen und beschleunigten Stückgutes und der Auflageebene der Beschleunigungsstrecke herrschen müssen, so dass Differenzen in den produzierten Lücken oder Beabstandungen zwischen den Stückgütern auftreten können.

Außerdem unterliegen solche Beschleunigungsstrecken einem erhöhten Verschleiß, da die Stückgüter während ihres Übertritts auf die Beschleunigungsstrecke sich noch teilweise auf dem langsamer laufenden vorgeordneten Förderband befinden, was zwangsläufig einen Schlupf bedeutet, der zu einem erhöhten Abrieb und Bandverschleiß nach längerer Betriebsdauer führen kann.

Dagegen führt jedes Stückgut beim Übertritt auf den zweiten Transportabschnitt der erfindungsgemäßen Transportstrecke die beschriebene Nickbewegung aus, was aufgrund der unterschiedlichen Steigungen der in Förderrichtung aneinander anschließenden ersten und zweiten Auflageebenen zu einem Ablösen des jeweiligen Stückgutes von der ersten Auflageebene führt, sobald sich sein Massenschwerpunkt über dem Spalt und oberhalb der Walze befindet. Durch die Nickbewegung, womit die oben schon beschriebene Kippbewegung um eine Querachse des jeweiligen Stückgutes gemeint ist, berührt die Unterseite des Stückgutes erst dann die zweite Auflageebene, wenn sich seine Unterseite bereits von der ersten Auflageebene abgelöst hat.

Die Walze kann sich wahlweise frei drehen, vorzugsweise möglichst widerstandsarm, oder ggf. auch angetrieben sein, wobei die sinnvolle Rotationsgeschwindigkeit einer angetriebenen Walze auf die erste Fördergeschwindigkeit des ersten Transportabschnittes abgestimmt ist und vorzugsweise mit dieser übereinstimmt. Ansonsten wären dort Geschwindigkeitsdifferenzen auszugleichen, was wiederum für einen Schlupf sorgen würde. Wenn die Walze sich dagegen weitgehend widerstandsfrei drehen kann, schwankt ihre Umdrehungsgeschwindigkeit mit der Beschleunigung des Stückgutes unmittelbar nach dessen Kippen auf die zweite Auflageebene und kann sich somit immer wieder an die sich verändernde Fördergeschwindigkeit des jeweils die Walze kontaktierenden und über die Walze abwälzenden Stückgutes anpassen.

Anstelle einer solchen Walze kann zur Überbrückung des Spaltes auch eine geeignete Gleitfläche vorgesehen sein, über welche die Stückgüter unter Ausführung der beschriebenen Nickbewegung um ihre Querachse hinweggleiten, um von der ersten Auflageebene auf die zweite Auflageebene zu gelangen, wo sie mit der erhöhten Fördergeschwindigkeit des zweiten Transportabschnittes und mit vergrößerten Zwischenräumen voneinander weiterbefördert werden.

Die Transportstrecke kann bspw. zur Beförderung und zur Beabstandung von zunächst lückenlos transportierten Verpackungseinheiten genutzt werden, indem diese Verpackungseinheiten mittels nachgeordneter und mit überstumpfen Winkeln aufeinandertreffender Förderbandabschnitte befördert werden. Die zuvor erläuterten Transportabschnitte können hier durch jeweilige Transportbänder gebildet sein, so durch ein erstes Transportband, dessen Auflageebene mit einer leicht ansteigenden Neigung mit der ersten Fördergeschwindigkeit bewegt wird, welches gefolgt ist von einem zweiten Transportband, dessen Auflageebene mit einer leicht abfallenden Neigung mit der ersten Fördergeschwindigkeit bewegt wird.

Das erste Transportband bildet somit den ersten Transportabschnitt. Das zweite Transportband bildet den zweiten Transportabschnitt. Die zweite Fördergeschwindigkeit des leicht abfallenden zweiten Transportbandes liegt über der ersten Fördergeschwindigkeit des leicht ansteigenden ersten Transportbandes. Die Geschwindigkeitsdifferenz ist so zu wählen, dass jeweils Lücken gewünschter Länge zwischen die Verpackungseinheiten gezogen werden.

Dem zweiten Transportband ist vorzugsweise ein drittes Transportband nachgeordnet, das vorzugsweise eine horizontale Auflageebene für die Verpackungseinheiten zur Verfügung stellt, die sich mit der dritten Fördergeschwindigkeit in Förderrichtung bewegt. Das dritte Transportband bildet den dritten Transportabschnitt. Die dritte Fördergeschwindigkeit entspricht sinnvollerweise der zweiten Fördergeschwindigkeit, da die mit dem zweiten Transportband hergestellten Lücken im weiteren Förderverlauf normalerweise nicht mehr verändert werden müssen.

Die Lücken sind unter Einfluss der aufeinander abgestimmten Fördergeschwindigkeiten normalerweise so zu bemessen, dass Schubelemente rückseitig an die Verpackungseinheiten angreifen können, die bspw. im Bereich des dritten Transportbandes von einem Bereich unterhalb der Auflageebene auftauchen und jeweils rückseitig an einer der Verpackungseinheiten angreifen, um diese nach Passieren des dritten Transportbandes über eine horizontale Förderebene schieben zu können.

Die bspw. als Schubfinger ausgebildeten Schubelemente können insbesondere an einer endlos umlaufenden Schubkette verankert sein, die für einen stetigen Vorschub der Schubelemente parallel zur Auflageebene des dritten Transportbandes und darüber hinaus parallel entlang der horizontalen Förderebene sorgen kann, wobei die als Schubfinger ausgebildeten Schubelemente jeweils am Beginn des dritten Transportbandes aus ihrer versenkten Lage nach oben über die Transportebene hinausbewegt und in eine ungefähr senkrechte Position gebracht werden, die für ihre rückseitige Schiebebewegung der Verpackungseinheiten am günstigsten ist.

Die Länge der Schubkette kann auf die Transportlänge der horizontalen Förderebene abgestimmt sein. Die Förderebene kann bspw. in einer Handhabungseinrichtung münden, die für eine Übernahme der dort angelieferten Verpackungseinheiten mittels einer Greifeinrichtung und zur Stapelung, Palettierung oder anderweitigen Überführung in einen anderen Stapel- und/oder Verpackungszustand sorgen kann.

Die Verpackungseinheiten können bspw. als Sekundär- und/oder Tertiärverpackungen für gruppierte Getränkebehälter ausgebildet sein. Eine Kartonumverpackung kann bspw. eine größere Anzahl von aufrechtstehenden Getränkebehältern in Rechteckanordnung aufnehmen, wobei die schalenartige Kartonumverpackung einem Tray ähneln kann, dessen hochgezogene Seitenränder für eine Stabilisierung der in der Kartonumverpackung aufgenommenen Getränkebehälter sorgen können.

Die in Förderrichtung auf dem ersten Transportband annähernd lückenlos transportierten Verpackungseinheiten können bspw. aus einem Teilabschnitt einer Verpackungsmaschine mit geeigneten Verpackungsmodulen herangeliefert werden, wobei diese Verpackungsmaschine und/oder ihre Verpackungsmodule hier jedoch nicht näher beschrieben sind. Diese Verpackungsmodule des Teilabschnittes der Verpackungsmaschine können in einer Weise ausgestaltet und konfiguriert sein, dass sie bspw. für die Herstellung der Verpackungseinheiten in der jeweils gewünschten Konfiguration sorgen können. Eine solche Konfiguration kann z.B. die Zusammenfassung von gruppierten Getränkebehältern - diese können als Primärverpackungen betrachtet werden - mittels sekundärer Verpackungsmittel vorsehen, wobei solche sekundäre Verpackungsmittel bspw. durch horizontal um mehrere gruppierte Getränkebehälter gespannte Umreifungen gebildet sein können. Auf diese Weise können z.B. jeweils sechs oder acht Getränkebehälter in Rechteckanordnung mittels der als sekundärer Verpackung dienenden Umreifung zusammengefasst werden.

Mehrere solcher Sekundärverpackungen können anschließend in hierfür geeigneten weiteren Verpackungsmodulen in der entsprechend ausgestatteten und konfigurierten Verpackungsmaschine mittels der oben erwähnten Kartonumverpackungen zusammengefasst werden, so dass die Kartonumverpackungen als tertiäre Verpackungsmittel betrachtet werden können. Die solchermaßen als Tertiärverpackungen konfigurierten Verpackungseinheiten, die von dem solchermaßen ausgestalteten Teilabschnitt der vorgeordneten Verpackungsmaschine in weitgehend lückenloser Folge an die Transportstrecke geliefert werden, durchlaufen diese in der beschriebenen Weise unter Ausbildung der Lücken zwischen aufeinanderfolgend beförderten Verpackungseinheiten, bevor sie nach Passieren der Förderebene an hier nicht näher beschriebene nachgeordnete Handhabungseinrichtungen übergeben werden, die für eine Übernahme der dort angelieferten Verpackungseinheiten verantwortlich ist.

Wie schon oben erwähnt, können die Handhabungseinrichtungen bspw. geeignete Greifeinrichtungen o. dgl. Werkzeuge zur Stapelung, Palettierung oder anderweitigen Überführung der Verpackungseinheiten aufweisen, um eine Mehrzahl oder Vielzahl von Verpackungseinheiten in einen veränderten Stapel- und/oder Verpackungszustand zu bringen.

Es sei an dieser Stelle nochmals betont, dass die hier beschriebene Förderkombination mit den drei aufeinanderfolgend angeordneten Transportbändern in unterschiedlicher Weise gestaltet sein könnte, d.h. mit horizontalen ersten und dritten Transportbändern sowie dem dazwischen angeordneten zweiten Transportband, das in einer Weise mit Gefälle ausgebildet ist, dass sich zwischen den ersten und zweiten Transportbändern der erwähnte überstumpfe Winkel (β > 180°) ausbildet, während zwischen den zweiten und dritten Transportbändern der stumpfe Winkel (δ < 180°) liegt.

Ebenso wäre es möglich, das erste Transportband mit leichter Steigung auszubilden und das sich daran anschließende zweite Transportband ohne Steigung und ohne Gefälle, d.h. mit horizontaler Ausrichtung auszuführen. Das sich dran anschließende dritte Transportband kann wiederum vorzugsweise horizontal ausgerichtet sein. Auch in einem solchen Fall bildet sich zwischen den ersten und zweiten Transportbändern der erwähnte überstumpfe Winkel (β > 180°) aus, während zwischen den zweiten und dritten Transportbändern ein Winkel von etwa 180° liegt, weil dort keine winkelige Anstellung vorgesehen ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt einige zusammenwirkende Komponenten einer ersten Ausführungsvariante einer erfindungsgemäßen Transportstrecke in schematischer Seitenansicht.
Fig. 1B zeigt einige zusammenwirkende Komponenten einer zweiten Ausführungsvariante der erfindungsgemäßen Transportstrecke in schematischer Seitenansicht.
Fig. 1C zeigt die winkelige Ausrichtung aufeinanderfolgender Transportabschnitte der ersten Ausführungsvariante der Transportstrecke gemäß Fig. 1A.
Fig. 1D zeigt die winkelige Ausrichtung aufeinanderfolgender Transportabschnitte der zweiten Ausführungsvariante der Transportstrecke gemäß Fig. 1B.
Figuren 2A bis 2G zeigen in schematischen Seitenansichten aufeinanderfolgende Prozessphasen bei der Stückgutförderung über die Transportstrecke gemäß Fig. 1A und Fig. 1C.
Fig. 3 zeigt eine schematische Seitenansicht eines Ausführungsbeispiels der Transportstrecke gemäß Figuren 1A, 1C sowie Figuren 2A bis 2G, die der Förderung von Verpackungseinheiten dient.
Fig. 4 zeigt eine schematische Draufsicht auf eine Ausführungsvariante einer kompletten Getränkeabfüll- und Verpackungsanlage mit ihren zusammenwirkenden Modulen, wobei die Anlage mit einer Transportstrecke gemäß einer der Figuren 1A bis 3 ausgestattet sein kann.

Für gleiche oder gleich wirkende Elemente der Erfindung verwendet die nachfolgende Figurenbeschreibung in der Regel jeweils gleiche Bezugsziffern. Ferner werden der Übersicht halber in vielen Fällen nur solche Bezugsziffern in den einzelnen Figuren verwendet, die für die Beschreibung der jeweiligen Figur erforderlich sind. Die dargestellten Ausführungsformen stellen lediglich Beispiele dar, wie die erfindungsgemäße Transportstrecke oder das erfindungsgemäße Verfahren ausgestaltet sein können und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

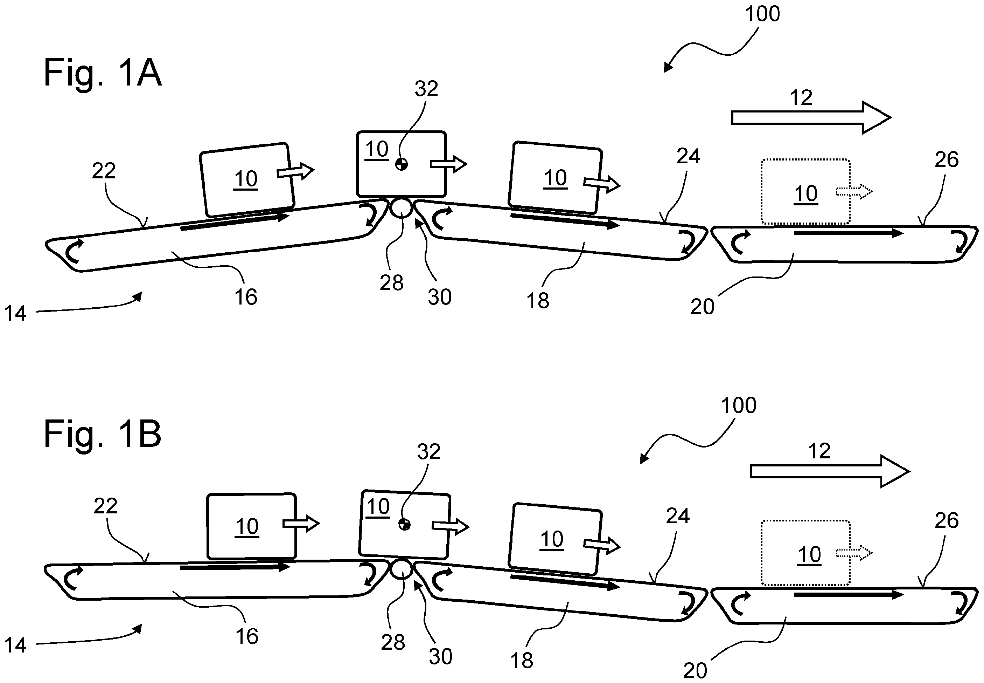

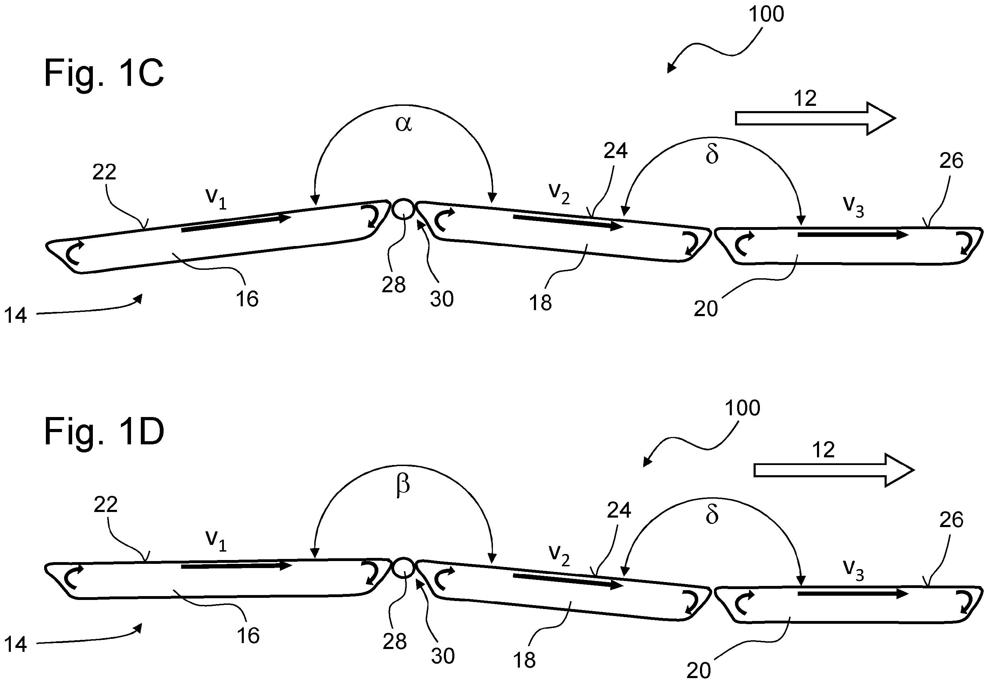

Die schematischen Seitenansichten der Figuren 1A bis 1D sollen zunächst die grundlegenden Prinzipien des erfindungsgemäßen Verfahrens zur Beförderung von Stückgütern veranschaulichen, wobei das Verfahren hier und bei den folgenden Passagen mit der Bezugsziffer 100 bezeichnet ist. Gezeigt sind jeweils zwei beispielhaft und alternativ zu verstehende Ausführungsvarianten, die jedoch in ihren Förderprinzipien im Wesentlichen übereinstimmen. Die erste Variante wird durch die Figuren 1A und 1C veranschaulicht, die zweite Variante durch die Figuren 1B und 1D.

Das hier beschriebene Verfahren 100 dient grundsätzlich der Beförderung von Stückgütern 10, die bspw. durch Verpackungseinheiten, durch Pakete, durch Gebinde oder durch andere Sekundär- oder Tertiärverpackungen gebildet sein können. Die in einer Transportrichtung oder Förderrichtung 12 von links nach rechts beförderten Stückgüter 10 (siehe Pfeil 12 in den Figuren 1A und 1B) weisen in der Regel eine flache Unterseite auf, wie dies bspw. bei Kartonverpackungen in Gestalt von Trays mit darin gehaltenen Getränkebehältern oder anderen Artikeln der Fall ist.

Wahlweise können die Stückgüter 10 auch durch Getränkekisten o. dgl. gebildet sein.

Eine wichtige Aufgabe des erfindungsgemäßen Förderverfahrens 100 besteht darin, die Stückgüter 10 voneinander zu beabstanden und nach der Beabstandung vorzugsweise in definierten Abständen zueinander in Förderrichtung 12 weiterzubefördern. Sofern die Stückgüter 10 bereits voneinander beabstandet sind, so besteht die vorrangige Aufgabe des erfindungsgemäßen Förderverfahrens 100 darin, die Abstände der Stückgüter 10 voneinander zu vergrößern und diese vergrößerten Abstände möglichst präzise vorzugeben und einzuhalten.

Das erfindungsgemäße Förderverfahren 100 wird unter Einsatz und Verwendung einer Transportstrecke 14 durchgeführt, bei der sich mehrere Transportabschnitte 16, 18 und 20 in Förderrichtung 12 aneinander anschließen. Jeder der hier gezeigten Transportabschnitte 16, 18, 20, die in Transport- oder Förderrichtung 12 fluchtend hintereinander angeordnet sind, verfügt jeweils über eine Auflageebene 22, 24, 26, wobei der erste Transportabschnitt 16 über eine erste Auflageebene 22 verfügt. Der sich in Förderrichtung 12 an den ersten Transportabschnitt 16 anschließende zweite Transportabschnitt 18 verfügt über eine zweite Auflageebene 24. Der sich in Förderrichtung 12 an den zweiten Transportabschnitt 18 anschließende dritte Transportabschnitt 20 verfügt über eine dritte Auflageebene 26.

Jede der Auflageebenen 22, 24 und 26 dient der Beförderung der Stückgüter 10 in Förderrichtung 12, wie dies durch die Figuren 1A und 1B in schematischer Weise veranschaulicht ist.

Die Auflageebenen 22, 24 und/oder 26 der entsprechenden Transportabschnitte 16, 18 bzw. 20 können insbesondere durch endlos umlaufende Mattenförderer o. dgl. gebildet und bereitgestellt sein, die jeweils über zwei Umlenkrollen (hier nicht gezeigt) geführt und elektromotorisch oder wahlweise auch über hydraulische Antriebsmotoren angetrieben sein können.

Wahlweise kann es sich bei den umlaufenden Auflageebenen 22, 24 und/oder 26 auch um endlos umlaufende Gliederketten handeln. Wahlweise können die umlaufenden Auflageebenen 22, 24 und/oder 26 auch durch ausreichend breite Kautschuk- oder Gewebebänder o. dgl. gebildet sein.

Das oberseitige Zugtrum jedes Transportabschnittes 16, 18 und 20 stellt dabei jeweils die entsprechende Auflageebene 22, 24 bzw. 26 für den Transport der Stückgüter 10 in Transport- oder Förderrichtung 12 zur Verfügung, während das unterseitige Leertrum des jeweiligen Transportabschnittes 16, 18 und 20 in Gegenrichtung leer zurückläuft.

Die Umlaufbewegungen der Auflageebenen 22, 24 und 26 und die hierdurch bewirkten Förderbewegungen der auf den Auflageebenen 22, 24 und 26 in Förderrichtung 12 bewegten Stückgüter 10 sind jeweils mit Richtungspfeilen verdeutlicht, und zwar innerhalb der jeweiligen Transportabschnitte 16, 18 und 20 sowie an den vorderen Stirnseiten der schematisch angedeuteten Stückgüter 10, die auf den Auflageebenen 22, 24 und 26 bewegt werden. Die bei den Transportabschnitten 16, 18 und 20 verwendeten Richtungspfeile sollen dabei die Umlaufbewegungen der drei dargestellten Auflageebenen 22, 24 und 26 mit ihrem jeweiligen oberseitigen Zugtrum und dem rücklaufenden unterseitigen Leertrum verdeutlichen.

Es sei allerdings schon an dieser Stelle betont, dass sich die vorliegende Erfindung auf die ersten beiden Transportabschnitt 16 und 18 mit ihren zugehörigen Auflageebenen 22 und 24 bezieht, während der dritte Transportabschnitt 20 mit seiner dritten Auflageebene 26 nicht in einem unmittelbaren Zusammenhang mit der erfindungsgemäßen Transportstrecke 14 und mit dem erfindungsgemäße Förderverfahren 100 steht, auch wenn der dritte Transportabschnitt 20 für die Erfüllung der gewünschten Transportaufgaben der Transportstrecke 14 sinnvoll oder notwendig ist, unabhängig von seiner konkreten Ausgestaltung.

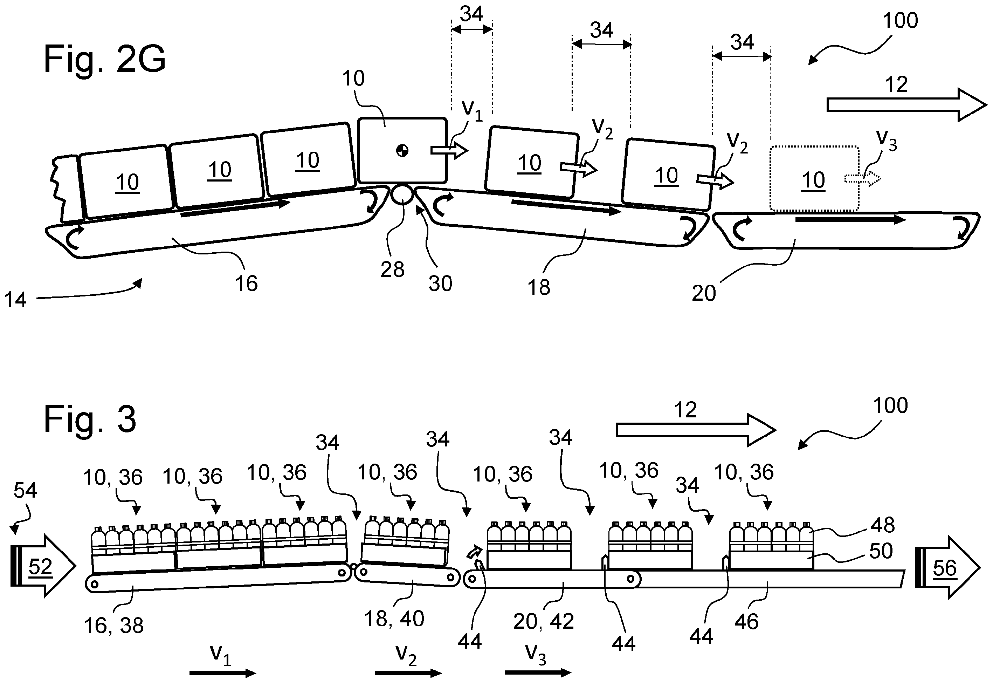

Eine mögliche Ausgestaltung des dritten Transportabschnittes 20 wird nachfolgend anhand der schematischen Darstellung der Fig. 3 beschrieben. Da jedoch die wichtigsten Erfindungsaspekte im Zusammenhang mit den ersten und zweiten Transportabschnitten 16 und 18 sowie ihrer Anordnung zueinander zu sehen ist, ist in den Figuren 1A und 1B das auf der dritten Auflageebene 26 des dritten Transportabschnittes 20 beförderte Stückgut 10 sowie sein frontseitig eingezeichneter Richtungspfeil in unterbrochener Linierung gezeichnet. Dies deshalb, da die Weiterbeförderung und die weitere Handhabung der in Förderrichtung 12 an dieser Stelle nicht weiter thematisiert werden soll.

Wie es die Figuren 1A und 1B verdeutlichen, werden die Stückgüter 10 zunächst auf der ersten Auflageebene 22 des ersten Transportabschnittes 16 in Förderrichtung 12 bewegt und danach auf die sich daran anschließende zweite Auflageebene 24 des zweiten Transportabschnittes 18 übergeben. Das erfindungsgemäße Verfahren 100 sieht vor, dass die Stückgüter 10 bei ihrem Übertritt vom ersten Transportabschnitt 16 auf den zweiten Transportabschnitt 18 eine Nickbewegung ausführen, d.h. eine Kippbewegung um die jeweilige Querachse des betreffenden Stückgutes 10.

Auf diese Weise können die Stückgüter 10 bei unterschiedlichen Fördergeschwindigkeiten der aufeinanderfolgenden Transportabschnitte 16 und 18 besonders schonend und unter weitgehender Vermeidung von unerwünschten und nur schwer kontrollierbaren und reproduzierbaren Reibungs- und/oder Schlupfeffekten von der ersten Auflageebene 22 auf die zweite Auflageebene 24 übertreten.

Diese Nickbewegungen können dadurch erreicht werden, dass die beiden Auflageebenen 22 und 24 nicht exakt in einer gemeinsamen horizontalen Ebene liegen, sondern dass sie in einem überstumpfen Winkel α (vgl. Fig. 1C) oder β (vgl. Fig. 1D) aneinandergrenzen, was die übertretenden Stückgüter 10 in eine Kippbewegung zwingt.

Die Fig. 1C, welche die Transportstrecke 14 gemäß Fig. 1A wiedergibt, zeigt diesen überstumpfen Winkel α, der zwischen den jeweiligen Auflageebenen 22 und 24 der ersten bzw. zweiten Transportabschnitte 16, 18 ausgebildet ist. Hierbei ist der erste Transportabschnitt 16 in einer Weise mit einer geringfügigen Steigung versehen, was durch eine gegenüber der hinteren Umlenkung höherliegend angeordnete vordere Umlenkung realisiert ist, so dass auch die erste Auflageebene 22 dieselbe Steigung beschreibt.

Außerdem ist der zweite Transportabschnitt 18 mit einem geringfügigen Gefälle versehen, was durch eine gegenüber der hinteren Umlenkung tieferliegend angeordneten vorderen Umlenkung realisiert ist, so dass auch die zweite Auflageebene 24 dasselbe Gefälle beschreibt. Die in Förderrichtung 12 gesehen vordere Umlenkung des ersten Transportabschnittes 16 kann vorzugsweise auf demselben Höhenniveau liegen wie die hintere Umlenkung des zweiten Transportabschnittes 18.

Die Fig. 1D, welche die Transportstrecke 14 gemäß Fig. 1B wiedergibt, verdeutlicht anhand einer alternativen Gestaltung ebenfalls einen überstumpfen Winkel β, der zwischen den jeweiligen Auflageebenen 22 und 24 der ersten bzw. zweiten Transportabschnitte 16, 18 ausgebildet ist. Allerdings ist der in der Fig. 1D gezeigte überstumpfe Winkel β geringfügig kleiner als der in der Fig. 1C gezeigte überstumpfe Winkel α.

Bei der Variante gemäß Fig. 1D ist der erste Transportabschnitt 16 horizontal ausgerichtet, während der sich in Förderrichtung 12 daran anschließende zweite Transportabschnitt 18 mit einem geringfügigen Gefälle versehen ist, was durch eine gegenüber der hinteren Umlenkung tieferliegend angeordnete vordere Umlenkung realisiert ist, so dass auch die zweite Auflageebene 24 dasselbe Gefälle beschreibt.

Die in Förderrichtung 12 gesehen vordere Umlenkung des ersten Transportabschnittes 16 kann sich dabei wiederum auf demselben Höhenniveau befinden wie die hintere Umlenkung des zweiten Transportabschnittes 18.

Bei beiden Varianten, wie sie in den Figuren 1A bis 1D in schematischer Weise gezeigt sind, stellt der dritte Transportabschnitt 20 jeweils eine horizontale dritte Auflageebene 26 zur Verfügung, was jedoch nicht als unabdingbares Merkmal zu verstehen ist. Der dritte Transportabschnitt 20, der der Weiterbeförderung der in definierte Abstände zueinander gebrachten Stückgüter 10 dient, schließt sich ohne Ausbildung einer Stufe an den zweiten Transportabschnitt 18 an, so dass von dort die Stückgüter 10 störungs- und erschütterungsfrei unter Beibehaltung ihrer zuvor aufgeprägten Abstände voneinander übertreten und auf der dritten Auflageebene 26 in derselben Fördergeschwindigkeit weiterbefördert werden können.

Auch wenn die Figuren 1C und 1D die angewinkelte Anstellung der Auflageebenen 22 und 24 zueinander in unmissverständlicher Weise veranschaulicht, sei an dieser Stelle rein vorsorglich klargestellt, dass der überstumpfe Winkel α (vgl. Fig. 1C) sowie auch der überstumpfe Winkel β (vgl. Fig. 1D) jeweils zwischen der ersten Auflageebene 22 und der zweiten Auflageebene 24 innerhalb einer senkrechten (gedachten, hier nicht dargestellten) Ebene angetragen und abzulesen ist, die parallel zur Förderrichtung 12 liegt und die bspw. senkrecht zu den Mittelachsen der miteinander fluchtenden Auflageebenen 22 und 24 angeordnet sein kann.

Der besondere Vorteil der erzwungenen Nickbewegungen der vom ersten Transportabschnitt 16 auf den zweiten Transportabschnitt 18 übertretenden Stückgüter 10 besteht in den dadurch vermiedenen Schlupfeffekten, wenn der zweite Transportabschnitt 18 als Beschleunigungsstrecke dienen soll. Mit dem als Beschleunigungsstrecke ausgebildeten zweiten Transportabschnitt 18 werden die Stückgüter 10 schneller weiterbefördert, als sie mittels des ersten Transportabschnittes 16 heranbefördert werden. Dieser vorzugsweise langsamer als der zweite Transportabschnitt 18 laufende erste Transportabschnitt 16 kann somit auch als Verzögerungsstrecke betrachtet werden, zumindest in Bezug auf die sich unmittelbar daran anschließende Beschleunigungsstrecke des zweiten Transportabschnittes 18.

Diese Funktion einer Beschleunigungsstrecke kann insbesondere dafür genutzt werden, um bestehende Lücken zwischen aufeinanderfolgend auf der ersten Auflageebene 22 der Transportstrecke 16 heranbeförderten Stückgütern 10 zu vergrößern.

Insbesondere jedoch kann die durch den zweiten Transportabschnitt 18 realisierte Funktion der Beschleunigungsstrecke dafür genutzt werden, um lückenlos auf der ersten Auflageebene 22 der Transportstrecke 16 heranbeförderte Stückgüter 10 mit definierten Lücken zu versehen, um bspw. mit Schubstangen oder anderen geeigneten Schubelementen zwischen die Stückgüter 10 eingreifen zu können und diese unter rückseitiger Anlage der Schubstangen oder Schubelemente weiterzubefördern, etwa auf einer nicht angetriebenen Gleitebene.

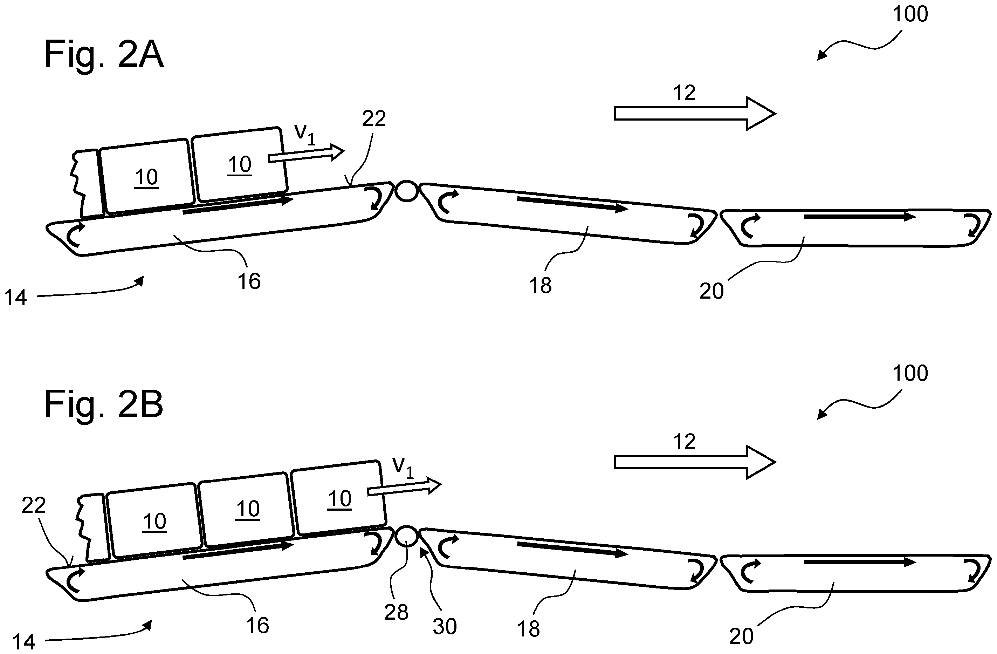

Diese Variante der weitgehend lückenlos mittels des ersten Transportabschnittes 16 herantransportierten und beim Übergang zum zweiten Transportabschnitt 18 mit definierten Lücken zueinander versehenen Stückgüter 10 findet sich in den nachfolgend beschriebenen Figuren 2A bis 2G veranschaulicht, ebenso in der weiter unten beschriebenen Fig. 3.

Allerdings kann die Hauptaufgabe der Schubstangen oder Schubelemente (vgl. hierzu Fig. 3) in einer exakten Positionsvorgabe für die Stückgüter 10 in Förderrichtung 12 gesehen werden, etwa um weitere Handhabungs- oder Behandlungsschritte mit dafür vorgesehenen Handhabungseinrichtungen oder Greifern an exakt vorgebbaren Positionen vornehmen zu können, was bspw. bei einer lückenlosen Beförderung auf einem entsprechend lang ausgebildeten Transportband nur mit erhöhtem Aufwand zu realisieren wäre, ggf. unter Zuhilfenahme von optischen Sensoreinrichtungen zur Positionsbestimmung der Stückgüter 10.

Um die Stückgüter 10 beim Übertritt vom ersten Transportabschnitt 16 auf den zweiten Transportabschnitt 18 voneinander zu beabstanden oder um bestehende Lücken zwischen den auf dem ersten Transportabschnitt 16 herantransportierten Stückgütern 10 zu vergrößern, ist die zweite Fördergeschwindigkeit v₂ der zweiten Auflageebene 24 des zweiten Transportabschnitts 18 notwendigerweise größer als die erste Fördergeschwindigkeit v₁ der ersten Auflageebene 22 des ersten Transportabschnittes 16 (vgl. hierzu die Figuren 1C und 1D).

Je nach dem im konkreten Anwendungsfall gewünschtem oder benötigten Ausmaß der Stückgutbeschleunigung mittels des als Beschleunigungsstrecke fungierenden zweiten Transportabschnittes 18 kann die zweite Fördergeschwindigkeit v₂ der zweiten Auflageebene 24 des zweiten Transportabschnittes 18 bspw. um mindestens 10% größer sein als die erste Fördergeschwindigkeit vi, wobei auch eine Geschwindigkeitszunahme um etwa 20% oder geringfügig mehr sinnvoll und in der Praxis realisierbar sein kann.

Eine dritte Fördergeschwindigkeit v₃ der dritten Auflageebene 26 des dritten Transportabschnittes 20 kann sinnvollerweise der zweiten Fördergeschwindigkeit v₂ entsprechen, da beim Übergang der Stückgüter 10 vom zweiten Transportabschnitt 18 auf den dritten Transportabschnitt 20 normalerweise keine Geschwindigkeitsänderung notwendig ist, denn die exakte Beabstandung der Stückgüter 10 voneinander erfolgt mittels des als Beschleunigungsstrecke fungierenden zweiten Transportabschnittes 18, vorzugsweise jedoch nicht unter Nutzung einer nochmaligen Geschwindigkeitsdifferenz im dritten Transportabschnitt 20.

In den Figuren 1C und 1D sind diese unterschiedlichen Förder- oder Vorschubgeschwindigkeiten v1, v2 und v3 oberhalb der jeweiligen Auflageebenen 22, 24 und 26 der Transportabschnitte 16, 18 bzw. 20 eingezeichnet. Außerdem ist dort jeweils der stumpfe Winkel δ zwischen der zweiten Auflageebene 24 und der dritten Auflageebene 26 angetragen, der aufgrund des geringen Gefälles der zweiten Auflageebene 24 und der horizontal ausgerichteten dritten Auflageebene 26 etwas weniger als 180° betragen muss.

Dagegen beträgt der überstumpfe Winkel α bei der ersten Ausführungsvariante gemäß Figuren 1A und 1C etwas mehr als 180°, ebenso wie der überstumpfe Winkel β bei der zweiten Ausführungsvariante gemäß Figuren 1B und 1D. Allerdings ist der Winkel β etwas kleiner als der Winkel α, da bei der zweiten Ausführungsvariante für den ersten Transportabschnitt 16 keine Steigung vorgesehen ist, sondern eine horizontal verlaufende erste Auflageebene 22. In der Praxis dürfte es sinnvoll sein, für die Winkel α bzw. β nur wenig mehr als 180° vorzusehen, da damit bereits der angestrebte Zweck erzielt werden kann.

So können die Winkel α und β bspw. 181° oder geringfügig mehr als 181° betragen. Sinnvolle Winkel α und β können bspw. auch zwischen 181° und etwa 185° liegen.

Die Figuren 1A bis 1D lassen weiterhin eine Walze 28 erkennen, die einen Spalt 30 zwischen dem ersten Transportabschnitt 16 und dem zweiten Transportabschnitt 18 ausfüllen kann, so dass das jeweils vom ersten Transportabschnitt 16 auf den zweiten Transportabschnitt 18 übertretende Stückgut 10 darüber abwälzen kann, wodurch der Nick- und Kippvorgang beim Übertreten auf die zweite Auflageebene 24 des zweiten Transportabschnittes 18 weitgehend störungsfrei und ohne bremsende Reibungseffekte vonstattengehen kann.

Die Figuren 1A und 1B zeigen jeweils ein Stückgut 10, das sich mittig auf dieser Walze 28 befindet und das sich aktuell im Kippvorgang befindet, weil sich seine Unterseite bereits von der ersten Auflageebene 22 gelöst, aber noch nicht die zweite Auflageebene 24 erreicht hat. Sofern sich die Walze 28 leicht und widerstandsarm oder weitgehend widerstandsfrei drehen lässt, kann der Übertritt der Stückgüter 10 von der ersten Auflageebene 22 auf die zweite Auflageebene 24 sehr präzise und für alle Stückgüter 10 gleichförmig erfolgen, wobei gleichzeitig die Beschleunigung auf die erhöhte zweite Fördergeschwindigkeit v₁ erfolgen kann, sobald der Kippvorgang abgeschlossen ist und das Stückgut 10 mit seiner Unterseite auf der zweiten Auflageebene 24 aufliegt.

Der besondere Vorteil der erfindungsgemäß ausgestalteten Transportstrecke 14 besteht darin, dass die Beschleunigung der Stückgüter 10 auf die zweite Fördergeschwindigkeit v₂ der zweiten Auflageebene 24 unter reproduzierbaren Bedingungen gewährleistet werden kann, während derartige Beschleunigungsstrecken, bei denen die Stückgüter 10 in horizontaler Richtung beschleunigt werden, ohne dass eine Nickbewegung erfolgt, keine exakte Positionierung gewährleisten können, da nicht bei jedem Übertritt eines Stückgutes 10 jeweils zwangsläufig dieselben Reibungsbedingungen zwischen der Unterseite des mitgezogenen und beschleunigten Stückgutes 10 und der Auflageebene 24 der Beschleunigungsstrecke herrschen müssen, so dass Differenzen in den produzierten Lücken oder Beabstandungen zwischen den Stückgütern 10 auftreten können.

Außerdem unterliegen solche Beschleunigungsstrecken einem erhöhten Verschleiß, da die Stückgüter 10 während ihres Übertritts auf die Beschleunigungsstrecke sich noch teilweise auf dem langsamer laufenden vorgeordneten Förderband befinden, was zwangsläufig einen Schlupf bedeutet, der zu einem erhöhten Abrieb und Bandverschleiß nach längerer Betriebsdauer führen kann.

Dagegen führt jedes Stückgut 10 beim Übertritt auf den zweiten Transportabschnitt 18 die beschriebene Nickbewegung aus, was aufgrund der unterschiedlichen Steigungen der in Förderrichtung 12 aneinander anschließenden ersten und zweiten Auflageebenen 22 und 24 zu einem Ablösen des jeweiligen Stückgutes 10 von der ersten Auflageebene 22 führt, sobald sich sein Massenschwerpunkt 32 (vgl. Figuren 1A und 1B) über dem Spalt 30 und oberhalb der Walze 28 befindet. Durch die Nickbewegung, womit die oben schon beschriebene Kippbewegung um eine Querachse des jeweiligen Stückgutes 10 gemeint ist, berührt die Unterseite des Stückgutes 10 erst dann die zweite Auflageebene 24, wenn sie sich bereits von der ersten Auflageebene 22 abgelöst hat.

Die Walze 28 kann sich wahlweise frei drehen, vorzugsweise möglichst widerstandsarm, oder ggf. auch angetrieben sein, wobei die sinnvolle Rotationsgeschwindigkeit einer angetriebenen Walze 28 auf die erste Fördergeschwindigkeit v₁ des ersten Transportabschnittes 16 abgestimmt ist und vorzugsweise mit dieser übereinstimmt. Ansonsten wären dort Geschwindigkeitsdifferenzen auszugleichen, was wiederum für einen Schlupf sorgen würde. Wenn die Walze 28 sich dagegen weitgehend widerstandsfrei drehen kann, schwankt ihre Umdrehungsgeschwindigkeit mit der Beschleunigung des Stückgutes 10 unmittelbar nach dessen Kippen auf die zweite Auflageebene 24 und kann sich somit immer wieder an die sich verändernde Fördergeschwindigkeit des jeweils die Walze 28 kontaktierenden und über die Walze 28 abwälzenden Stückgutes 10 anpassen.

Anstelle einer solchen Walze 28 kann zur Überbrückung des Spaltes 30 auch eine geeignete Gleitfläche (hier nicht gezeigt) vorgesehen sein, über welche die Stückgüter 10 unter Ausführung der beschriebenen Nickbewegung um ihre Querachse hinweggleiten, um von der ersten Auflageebene 22 auf die zweite Auflageebene 24 zu gelangen, wo sie mit der erhöhten Fördergeschwindigkeit v₂ des zweiten Transportabschnittes 18 und mit vergrößerten Zwischenräumen voneinander weiterbefördert werden.

Die Figuren 2A bis 2G zeigen in insgesamt sieben schematischen Seitenansichten aufeinanderfolgende Verfahrensschritte bei der Durchführung des oben beschriebenen Förderverfahrens 100, wobei die Transportstrecke 14 die Konfiguration gemäß Figuren 1A und 1C mit der ansteigenden ersten Auflageebene 22 und der sich daran anschließenden abfallenden zweiten Auflageebene 24 aufweist.

Im Interesse einer besseren Übersichtlichkeit werden in den nachfolgend beschriebenen Figuren 2A bis 2G teilweise nur diejenigen Bezugsziffern in den einzelnen zeichnerischen Darstellungen verwendet, die sich auch im nachfolgenden Beschreibungstext zur jeweiligen Figur finden.

So kann die in Fig. 2A gezeigte Verfahrensphase als erste Phase betrachtet werden, bei der eine ununterbrochene Reihe von annähernd lückenlos aufeinanderfolgend transportierten Stückgütern 10 der Transportstrecke 14 zugeführt und mittels des ersten Transportabschnittes 16 in Förderrichtung 12 befördert werden. Die normalerweise mit einer geringeren positiven Steigung auf der ersten Auflageebene 22 des ersten Transportabschnittes 16 in Förderrichtung 12 (in den Figuren 2A ff. von links nach rechts) als zeichnerisch dargestellt beförderten Stückgüter werden dabei mit einer ersten Fördergeschwindigkeit v₁ befördert, was durch die entsprechende Kennzeichnung des dem zuvorderst beförderten Stückgut 10 zugeordneten Richtungspfeiles verdeutlicht ist.

Die Darstellungen der Figuren 2A bis 2G zeigen den Beginn einer entsprechenden Stückgutförderung, indem sie bei Fig. 2A mit der auf dem ersten Transportabschnitt 16 heranbeförderten ununterbrochenen Stückgutreihe einsetzen, während sich auf den nachfolgenden zweiten und dritten Transportabschnitten 18 und 20 noch keine Stückgüter 10 befinden. Die solchermaßen veranschaulichten und hier beschriebenen Prinzipien der Stückgutbeförderung und deren Beschleunigung mittels des schneller laufenden zweiten Transportabschnittes 18 gelten jedoch für jede beliebige Förderphase, bei denen sich die Stückgüter 10 auf allen gezeigten Transportabschnitten 16, 18 und 20 befinden.

Gemäß Fig. 2B erreicht das zuvorderst befindliche Stückgut 10 der in der ununterbrochen und weitgehend lückenlos beförderten Reihe an Stückgütern 10 das Ende des ersten Transportabschnittes 16, so dass es sich kurz vor dem Übergang zur rotierbaren Walze 28 befindet, die sich im Spalt 30 zwischen dem ersten Transportabschnitt 16 und dem zweiten Transportabschnitt 18 befindet.

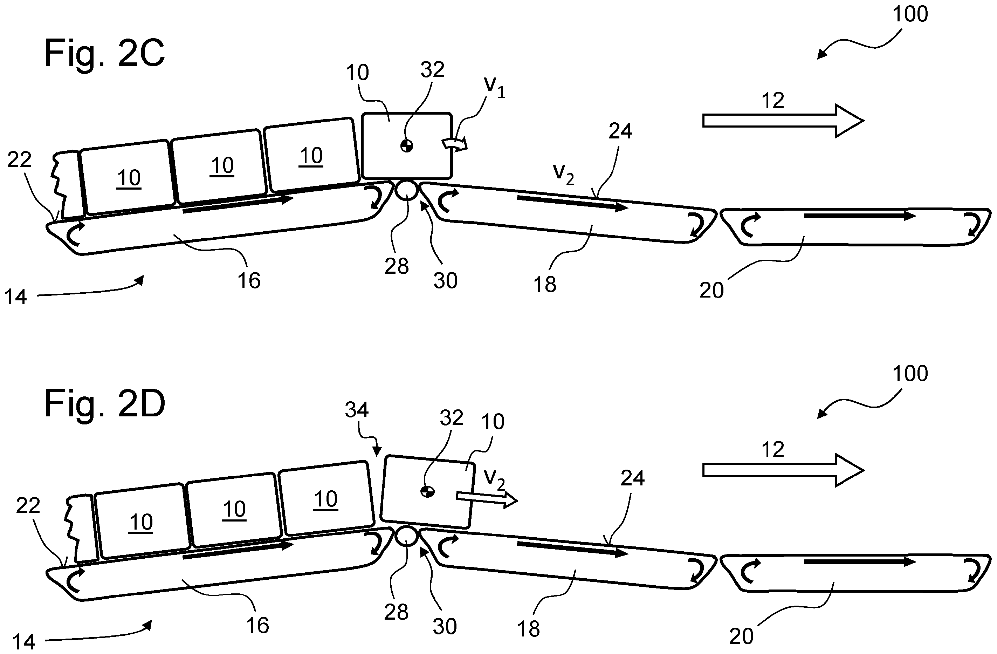

Die nächste Phase ist in Fig. 2C veranschaulicht, bei der das zuvorderst beförderte Stückgut 10 der Reihe bereits auf die Walze 28 übergetreten ist. Dieses zuvorderst befindliche Stückgut 10 hat bereits einen Teil seiner Nickbewegung ausgeführt und befindet sich momentan in einer horizontalen Lage, in der es noch immer mit der ersten Fördergeschwindigkeit v₁ der ersten Auflageebene 22 bewegt wird. Der Massenschwerpunkt 32 des zuvorderst befindlichen Stückgutes 10 der Reihe kann sich hierbei ungefähr in senkrechter Linie oberhalb der Drehachse der Walze 28 und damit ungefähr mittig über dem Spalt 30 befinden.

Auch wenn die Unterseite des vordersten Stückgutes 10 sich bereits von der ersten Auflageebene 22 gelöst hat und in der in Fig. 2C gezeigten Phase lediglich durch die Walze 28 abgestützt wird, die hierbei in passender Umdrehungsgeschwindigkeit rotieren kann, um das Stückgut 10 weder abzubremsen noch zu beschleunigen, hat noch keine Beschleunigung durch die schneller mit v₂ laufende zweite Auflageebene 24 stattgefunden. Dies ist deshalb in der gezeigten Phase noch nicht möglich, da die Unterseite des vordersten Stückgutes 10 seine Nickbewegung noch nicht abgeschlossen und deshalb die zweite Auflageebene 24 noch nicht kontaktiert hat.

Ebenso wenig ist eine Verzögerung des zuvorderst befindlichen Stückgutes 10 möglich, da bei der gezeigten Anordnung der weitgehend lückenlos hintereinander beförderten Stückgüter 10 ein Staudruck durch die nachfolgenden Stückgüter 10 erzeugt wird, da sich die erste Auflageebene 22 normalerweise mit konstanter erster Fördergeschwindigkeit v₁ weiterbewegt und weder verzögert noch beschleunigt wird.

In der in Fig. 2D gezeigten nachfolgenden Prozessphase wurde das zuvorderst bewegte Stückgut 10 der Reihe auf die höhere zweite Fördergeschwindigkeit v₂ des zweiten Transportabschnittes 18 beschleunigt, da es seine Nickbewegung abgeschlossen hat, bei der sein Massenschwerpunkt 32 bereits die Walze 28 hinter sich gelassen hat, auch wenn sich der hintere Teil der Unterseite des Stückgutes 10 noch auf der sich dabei drehenden Walze 28 befinden kann.

Da die zweite Fördergeschwindigkeit v₂ der zweiten Auflageebene 24 höher ist als die erste Fördergeschwindigkeit vi, wird das Stückgut 10 beschleunigt und dabei gleichzeitig von den nachfolgenden Stückgütern 10 distanziert. In dieser Prozessphase dreht sich die Walze 28 kurzzeitig schneller und passt sich in ihrer Umdrehungsgeschwindigkeit an die Fördergeschwindigkeit v₂ an, die dem Stückgut 10 durch seine unterseitige Kontaktierung mit der zweiten Auflageebene 22 aufgeprägt wird.

Zwischen dem zuvorderst beförderten Stückgut 10, das zumindest teilweise bereits auf die ein Gefälle aufweisende zweite Auflageebene 22 des zweiten Transportabschnittes 18 übergetreten ist und dort mit der höheren zweiten Fördergeschwindigkeit v₂ bewegt wird, und dem als nächstes nachfolgenden Stückgut 10 wird durch die Beschleunigung des vorauslaufenden Stückgutes 10 eine Lücke 34 gezogen, die in einer nachfolgenden Transportphase einen Eingriff eines Schubelements, gebildet durch einen von oben in den Förderweg hinabtauchenden Schubbalken oder durch von unten aus der Förderebene auftauchenden Schubfinger o. dgl., ermöglicht (vgl. hierzu die Fig. 3).

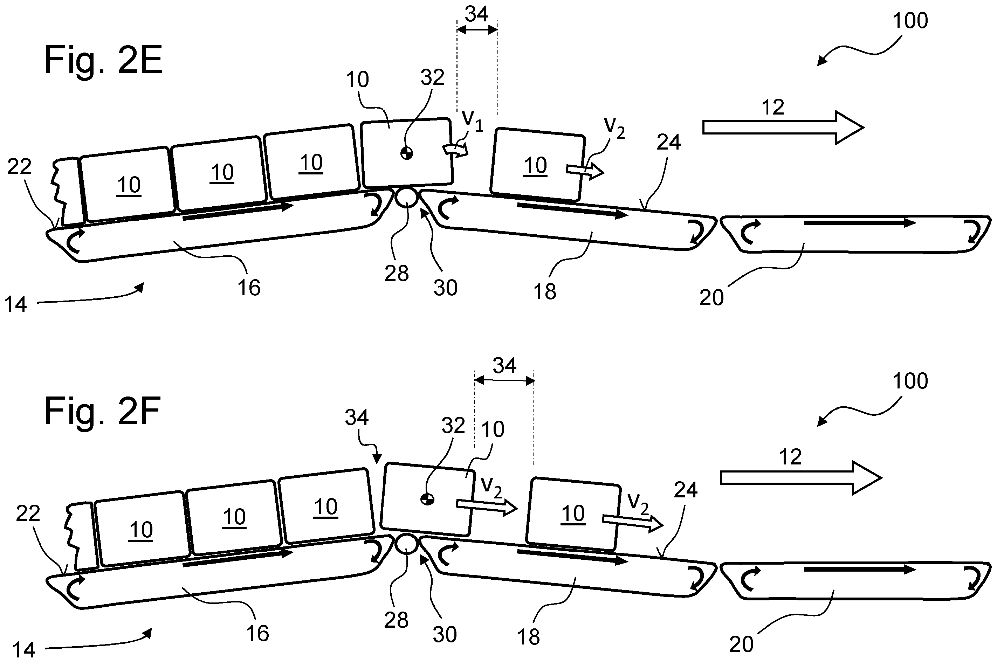

Die Fig. 2E verdeutlicht eine Verfahrensphase, bei der sich das zuvorderst bewegte Stückgut 10 auf dem gegenüber dem ersten Transportabschnitt 16 abfallenden zweiten Transportabschnitt 18 befindet und dort mit der zweiten Fördergeschwindigkeit v₂ bewegt und dadurch mit sich vergrößernder Lücke 34 vom nachfolgenden Stückgut 10 distanziert wird. Dieses nachfolgende zweite Stückgut 10 der Reihe hat zwar die Walze 28 bereits erreicht, befindet sich aber erst am Beginn seiner Nickbewegung, bei der ein hinterer Bereich seiner Unterseite sich noch nicht von der ersten Auflageebene 22 gelöst hat, so dass es sich noch stabil mit der ersten Fördergeschwindigkeit v₁ bewegt. Dies gibt dem vorauslaufenden Stückgut 10 wiederum Gelegenheit, die Lücke 34 allmählich zu vergrößern.

Die Fig. 2F verdeutlicht eine weiter fortgeschrittene Verfahrensphase, bei der das zuvorderst bewegte Stückgut 10 weiter in Förderrichtung 12 auf dem gegenüber dem ersten Transportabschnitt 16 abfallenden zweiten Transportabschnitt 18 bewegt wurde.

Das nachfolgende zweite Stückgut 10 der Reihe hat mit seinem Massenschwerpunkt 32 die Walze 28 bereits passiert, so dass seine Nickbewegung bereits abgeschlossen ist. Da der vordere Bereich seiner Unterseite bereits von der zweiten Auflageebene 24 mitgezogen wurde, bewegt es sich mit der höheren zweiten Fördergeschwindigkeit v₂. Die Abstände zwischen den auf der zweiten Auflageebene 24 befindlichen und dort gleichermaßen mit der zweiten Fördergeschwindigkeit v2 bewegten Stückgüter 10 bleiben ab dieser Phase konstant, was in Fig. 2F durch die gegenüber der in Fig. 2E gezeigten Phase vergrößerten Lücke 34 verdeutlicht ist.

Die Fig. 2G schreibt die oben beschriebenen aufeinanderfolgenden Prozessphasen fort und verdeutlicht die definierten Lücken 34 zwischen den aufeinanderfolgenden Stückgütern 10 der Reihe, die allesamt zunächst auf dem leicht ansteigenden ersten Transportabschnitt 16, anschließend auf dem leicht abfallenden zweiten Transportabschnitt 18 und schließlich auf dem horizontalen dritten Transportabschnitt 20 befördert werden.

Dabei werden die Stückgüter 10 zunächst auf dem ersten Transportabschnitt 16 mit der ersten Fördergeschwindigkeit vi, ab dem zweiten Transportabschnitt 18 mit der erhöhten zweiten Fördergeschwindigkeit v₂ und auf dem dritten Transportabschnitt 20 mit der gegenüber der zweiten Fördergeschwindigkeit v₂ unveränderten dritten Fördergeschwindigkeit v₃ befördert. Dies ist durch die entsprechenden Pfeile an den Stirnseiten der Stückgüter 10 verdeutlicht.

Es sei an dieser Stelle nochmals betont, dass die in den Figuren 2A bis 2G gezeigte Förderkombination mit den drei aufeinanderfolgend angeordneten Transportabschnitten 16, 18 und 20 ebenso in der in den Figuren 1B und 1D gezeigten Weise gestaltet sein könnte, d.h. mit horizontalen ersten und dritten Transportabschnitten 16 und 20 sowie dem dazwischen angeordneten zweiten Transportabschnitt 18, der in einer Weise mit Gefälle ausgebildet ist, dass sich zwischen den ersten und zweiten Transportabschnitten 16 und 18 der erwähnte überstumpfe Winkel β (vgl. Fig. 1D) ausbildet, während zwischen den zweiten und dritten Transportabschnitten 18 und 20 der stumpfe Winkel δ liegt.

Die Fig. 3 verdeutlicht in einer schematischen Seitenansicht eine mögliche Anwendung für das zuvor ausführlich erläuterte erfindungsgemäße Verfahren 100, das sich bspw. zur Beabstandung von zunächst lückenlos transportierten Verpackungseinheiten 36 mittels der oben erläuterten Prinzipien der mit überstumpfem Winkel α (vgl. Fig. 1C) aufeinandertreffenden Förderbandabschnitte eignet. Die zuvor anhand von schematischen Darstellungen (Figuren 1A bis 1D und Figuren 2A bis 2G) erläuterten Transportabschnitte 16, 18 und 20 sind hier gebildet durch ein erstes Transportband 38, dessen Auflageebene mit einer leicht ansteigenden Neigung mit der ersten Fördergeschwindigkeit v₁ bewegt wird, gefolgt von einem zweiten Transportband 40, dessen Auflageebene mit einer leicht abfallenden Neigung mit der ersten Fördergeschwindigkeit v₂ bewegt wird.

Das erste Transportband 38 bildet den ersten Transportabschnitt 16 gemäß Figuren 1A bis 2G. Das zweite Transportband 40 bildet den zweiten Transportabschnitt 18 gemäß Figuren 1A bis 2G. Die zweite Fördergeschwindigkeit v₂ des leicht abfallenden zweiten Transportbandes 40 liegt über der ersten Fördergeschwindigkeit v₁ des leicht ansteigenden ersten Transportbandes 38. Die Geschwindigkeitsdifferenz ist so zu wählen, dass jeweils Lücken 34 gewünschter Länge zwischen die Verpackungseinheiten 36 gemäß Fig. 3 gezogen werden.

Dem zweiten Transportband 40 ist ein drittes Transportband 42 nachgeordnet, das vorzugsweise eine horizontale Auflageebene für die Verpackungseinheiten 36 zur Verfügung stellt, die sich mit der dritten Fördergeschwindigkeit v₃ in Förderrichtung 12 bewegt. Das dritte Transportband 42 bildet den dritten Transportabschnitt 20 gemäß Figuren 1A bis 2G. Die dritte Fördergeschwindigkeit v₃ entspricht sinnvollerweise der zweiten Fördergeschwindigkeit v₂, da die mit dem zweiten Transportband 40 hergestellten Lücken 34 im weiteren Förderverlauf normalerweise nicht mehr verändert werden müssen.

Die Lücken 34 sind unter Einfluss der aufeinander abgestimmten Fördergeschwindigkeiten v₁, v₂ und v₃ normalerweise so zu bemessen, dass Schubelemente 44 rückseitig an die Verpackungseinheiten 36 angreifen können, die bspw. in der in Fig. 3 gezeigten Weise im Bereich des dritten Transportbandes 42 von einem Bereich unterhalb der Auflageebene auftauchen und jeweils rückseitig an einer der Verpackungseinheiten 36 angreifen, um diese nach Passieren des dritten Transportbandes 42 über eine horizontale Förderebene 46 schieben zu können.

Ein gekrümmter Richtungspfeil am Beginn des dritten Transportbandes 42 verdeutlicht das Auftauchen des dort befindlichen Schubelements 44, das noch während der Förderbewegung des dritten Transportbandes 42 zu diesem hinzukommt und nach dem Übergang auf die sich an das dritte Transportband 42 anschließende horizontale Förderebene 46 für den weiteren Transport der geschobenen Verpackungseinheit 36 auf der Gleitebene der Förderebene 46 sorgen kann.

Die bspw. als Schubfinger ausgebildeten Schubelemente 44 können insbesondere an einer endlos umlaufenden Schubkette (hier nicht gezeigt) verankert sein, die für einen stetigen Vorschub der Schubelemente 44 parallel zur Auflageebene des dritten Transportbandes 42 und darüber hinaus parallel entlang der horizontalen Förderebene 46 sorgen kann, wobei die als Schubfinger ausgebildeten Schubelemente 44 jeweils am Beginn des dritten Transportbandes 42 aus ihrer versenkten Lage nach oben über die Transportebene hinausbewegt und in eine ungefähr senkrechte Position gebracht werden, die für ihre rückseitige Schiebebewegung der Verpackungseinheiten 36 am günstigsten ist.

Die Länge der Schubkette kann auf die Transportlänge der horizontalen Förderebene 46 abgestimmt sein. Die Förderebene 46 kann bspw. in einer Handhabungseinrichtung münden, die für eine Übernahme der dort angelieferten Verpackungseinheiten 36 mittels einer Greifeinrichtung und zur Stapelung, Palettierung oder anderweitigen Überführung in einen anderen Stapel- und/oder Verpackungszustand sorgen kann, was hier jedoch nicht näher gezeigt ist.

Wie es die Fig. 3 in schematischer Weise andeutet, können die Verpackungseinheiten 36 bspw. durch Sekundär- und/oder Tertiärverpackungen für gruppierte Getränkebehälter 48 gebildet sein. Eine Kartonumverpackung 50 kann bspw. eine größere Anzahl von aufrechtstehenden Getränkebehältern 48 in Rechteckanordnung aufnehmen, wobei die schalenartige Kartonumverpackung 50 einem Tray ähneln kann, dessen hochgezogene Seitenränder für eine Stabilisierung der in der Kartonumverpackung 50 aufgenommenen Getränkebehälter 48 sorgen können.

Die in Förderrichtung 12 auf das erste Transportband 38 annähernd lückenlos transportierten Verpackungseinheiten 36 können bspw. aus einem Teilabschnitt einer Verpackungsmaschine 52 mit geeigneten Verpackungsmodulen 54 geliefert werden, die hier jedoch nicht näher beschrieben oder illustriert werden soll. Diese Verpackungsmodule 54 des hier nicht gezeigten Teilabschnitts der Verpackungsmaschine 52 können in einer Weise ausgestaltet und konfiguriert sein, dass sie bspw. für die Herstellung der Verpackungseinheiten 36 in der jeweils gewünschten Konfiguration sorgen können.

Eine solche Konfiguration kann z.B. die Zusammenfassung von gruppierten Getränkebehältern 48 - diese können als Primärverpackungen betrachtet werden - mittels sekundärer Verpackungsmittel vorsehen, wobei solche sekundäre Verpackungsmittel bspw. durch horizontal um mehrere gruppierte Getränkebehälter 48 gespannte Umreifungen gebildet sein können. Auf diese Weise können z.B. jeweils sechs oder acht Getränkebehälter 48 in Rechteckanordnung mittels der als sekundärer Verpackung dienenden Umreifung zusammengefasst werden.

Mehrere solcher Sekundärverpackungen können anschließend in hierfür geeigneten weiteren Verpackungsmodulen 54 in der entsprechend ausgestatteten und konfigurierten Verpackungsmaschine 52 mittels der oben erwähnten Kartonumverpackungen 50 zusammengefasst werden, so dass die Kartonumverpackungen 50 als tertiäre Verpackungsmittel betrachtet werden können.

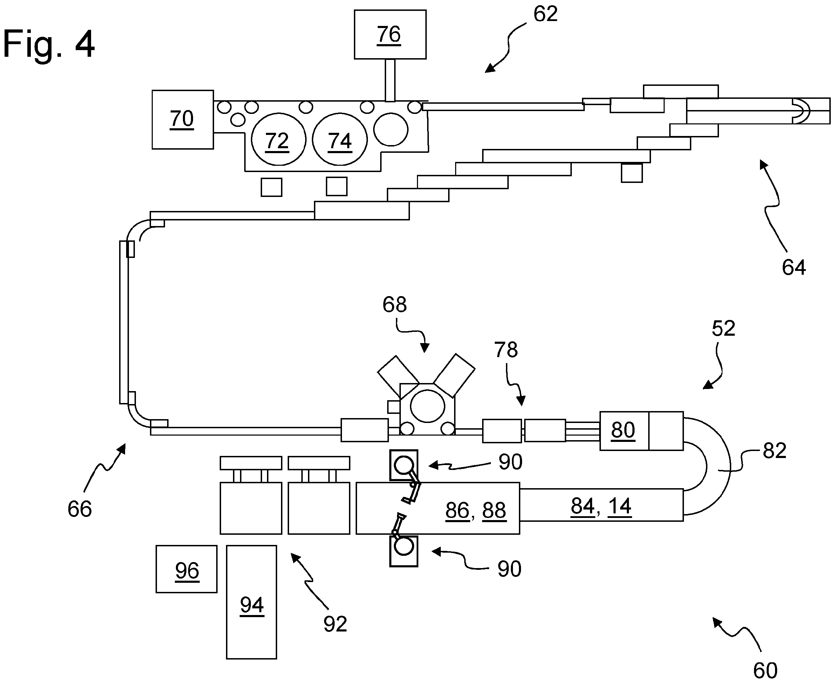

Die solchermaßen als Tertiärverpackungen konfigurierten Verpackungseinheiten 36, die von dem solchermaßen ausgestalteten Teilabschnitt der vorgeordneten Verpackungsmaschine 52 (vgl. hierzu auch Fig. 4) in weitgehend lückenloser Folge an die Transportstrecke 14 geliefert werden, durchlaufen diese in der beschriebenen Weise unter Ausbildung der Lücken 34 zwischen aufeinanderfolgend beförderten Verpackungseinheiten 36, bevor sie nach Passieren der Förderebene 46 an hier nicht näher verdeutlichte oder beschriebene nachgeordnete Handhabungseinrichtungen 56 übergeben werden, die für eine Übernahme der dort angelieferten Verpackungseinheiten 36 verantwortlich ist.

Wie schon oben erwähnt, können die Handhabungseinrichtungen 56 bspw. Greifeinrichtungen o. dgl. Werkzeuge zur Stapelung, Palettierung oder anderweitigen Überführung der Verpackungseinheiten 36 aufweisen, um eine Mehrzahl oder Vielzahl von Verpackungseinheiten 36 in einen veränderten Stapel- und/oder Verpackungszustand zu bringen, was hier jedoch nicht näher gezeigt ist.

Es sei an dieser Stelle nochmals betont, dass die in Fig. 3 gezeigte Förderkombination mit den drei aufeinanderfolgend angeordneten Transportbändern 38, 40 und 42 ebenso in der in den Figuren 1B und 1D gezeigten Weise gestaltet sein könnte, d.h. mit horizontalen ersten und dritten Transportbändern 38 und 42 sowie dem dazwischen angeordneten zweiten Transportband 40, das in einer Weise mit Gefälle ausgebildet ist, dass sich zwischen den ersten und zweiten Transportbändern 38 und 40 der erwähnte überstumpfe Winkel β (> 180°; vgl. Fig. 1D) ausbildet, während zwischen den zweiten und dritten Transportbändern 40 und 42 der stumpfe Winkel δ (< 180°; vgl. Fig. 1D) liegt.

Außerdem sei ergänzend betont, dass die in Fig. 3 gezeigte Förderkombination mit den drei aufeinanderfolgend angeordneten Transportbändern 38, 40 und 42 ebenso in einer sich geringfügig von der in den Figuren 1B und 1D gezeigten Weise unterscheiden könnte. So wäre es ebenso möglich, das erste Transportband 38 mit leichter Steigung auszubilden und das sich daran anschließende zweite Transportband 40 ohne Steigung und ohne Gefälle, d.h. mit horizontaler Ausrichtung auszuführen. Das sich dran anschließende dritte Transportband 42 kann wiederum vorzugsweise horizontal ausgerichtet sein. Auch in einem solchen Fall bildet sich zwischen den ersten und zweiten Transportbändern 38 und 40 der erwähnte überstumpfe Winkel β (> 180°; ähnlich zu Fig. 1D) aus, während zwischen den zweiten und dritten Transportbändern 40 und 42 ein Winkel von etwa 180° liegt, weil dort keine winkelige Anstellung vorgesehen ist.

Die schematische Draufsicht der Fig. 4 zeigt eine Ausführungsvariante einer kompletten Getränkeabfüll- und Verpackungsanlage 60 mit ihren zusammenwirkenden Modulen, wobei bei der Anlage 60 insbesondere mit einer Transportstrecke 14 gemäß einem der Figuren 1A bis 2G oder gemäß Fig. 3 ausgestattet sein kann. Mehrere sinnvolle Positionierungsmöglichkeiten für die Transportstrecke 14 innerhalb der Getränkeabfüll- und Verpackungsanlage 60 sollen nachfolgend erläutert werden.

Die in der Fig. 4 gezeigte Ausführungsvariante der Getränkeabfüll- und Verpackungsanlage 60 besteht aus mehreren fördertechnisch miteinander in Verbindung stehenden Modulen, wobei die Gesamtanlage 60 zumindest einen sog. Nassteil 62 (in Fig. 4 oben) und eine Verpackungsmaschine 52 (in Fig. 4 unten; vgl. auch Fig. 3) umfasst. Mit einer solchen Getränkeabfüll- und Verpackungsanlage 60 lassen sich Behältnisse mit flüssigen Getränken befüllen und anschließend zu Verpackungseinheiten 36 oder Gebinden verpacken und zusammenfassen, insbesondere auch zu solchen Verpackungseinheiten 36, wie in der Fig. 3 beispielhaft gezeigt sind.

Gezeigt ist in der Fig. 4 eine sinnvolle Modulabfolge, wie sie bei der Herstellung, Abfüllung und weiteren Handhabung von Getränkebehältern aus Kunststoff, aus Mineralglas oder aus einem organischen Zellstoffmaterial zum Einsatz kommen kann. Es ist damit eine praktisch relevante Ausführungsvariante einer kompletten Getränkeabfüll- und Verpackungsanlage 60 mit ihren zusammenwirkenden Modulen gezeigt, wobei ein unterer Abschnitt der Gesamtanlage 60 durch die Verpackungsmaschine 52 gebildet ist, der weitere Handhabungselemente zur Palettierung von verpackten oder anderweitig fertiggestellten Verpackungseinheiten 36 (vgl. Fig. 3) nachgeordnet sind. Diese im unteren rechten Teil der Getränkeabfüll- und Verpackungsanlage 60 dargestellte Verpackungsmaschine 52 kann bspw. ein sog. Wrap-around-Packer, ein Tray-Packer o. dgl. sein. Zur Ausbildung solcher Verpackungseinheiten 36, wie sie in Fig. 3 beispielhaft gezeigt sind, kann die Verpackungsmaschine 52 auch eine Maschine zum Einsetzen von Behältergruppierungen in dafür vorgesehene Kartonumverpackungen 50 (vgl. Fig. 3) sein.

Die Modulreihenfolge der schematisch dargestellten Getränkeabfüll- und Verpackungsanlage 60 beginnt mit dem sog. Nassteil 62 (links oben), in dem ein Getränk in hierfür vorbereitete Behälter abgefüllt wird. Diese Behälter, die durch die genannten Getränkebehälter 48 wie Dosen oder Flaschen (vgl. Fig. 3) gebildet sein können, werden vom Nassteil 62 über zusammenhängende Förderabschnitte 64 (in Fig. 4 rechts oben) und 66 (in Fig. 4 links mittig) zu einem optionalen Etikettiermodul 68 befördert, das sich mittig im unteren Zeichnungsdrittel befindet. Im Etikettiermodul 68, das als optional angesehen werden kann, können die normalerweise in Reihen hintereinander beförderten Flüssigkeits- oder Getränkebehälter 48, Dosen oder Flaschen jeweils mit Etiketten ausgestattet werden.

Anstelle eines solchen Etikettiermoduls 68 kann innerhalb der Förderstrecke der Getränkeabfüll- und Verpackungsanlage 60 wahlweise auch ein Direktdruckmodul zum direkten Druckauftrag von Farbe auf die Behältermantelflächen vorgesehen sein. Ebenso möglich ist es, auf eine solche Etikettierung oder Bedruckung der Behälter zu verzichten, was bei farbig oder gestalterisch vorbereiteten Behältern oder bei anderweitig verpackten Behältern ggf. sinnvoll sei kann.

Zu Beginn der gezeigten Förderstrecke kann sich ein Behälterherstellungsmodul 70 befinden, sofern es sich bei den prozessierten Getränkebehältern 48 um solche aus Kunststoff oder z.B. aus geeignetem organischen Zellstoffmaterial handelt. Bei der Verwendung von metallenen Dosen oder von Flaschen aus Mineralglas als Getränkebehälter benötigt die Anlage 60 kein solches Behälterherstellungsmodul 70, sondern einen Zuführbereich für leere Behälter. Sofern mit der Getränkeabfüll- und Verpackungsanlage 60 bspw. ausschließlich Getränkebehälter aus Mineralglas verwendet, verarbeitet, befüllt und verpackt werden sollen, entfällt das Behälterherstellungsmodul 70, da solche Behälter eines anderen Herstellungsprozesses bedürfen und normalerweise nicht dafür geeignet sind, in einer vorgeordneten Produktionsstufe einer derartigen Anlage 60 hergestellt zu werden. In einem solchen Fall kann das Modul 70 bspw. als Anlieferungsmodul für gewaschene, gereinigte und inspizierte Getränkeflaschen ausgestaltet sein. Entsprechendes gilt normalerweise für metallene Dosen als Getränkebehälter.

Für den Fall, dass die im Behälterherstellungsmodul 70 z.B. durch Blasformen oder durch andere geeignete Verfahren hergestellten Getränkebehälter 48 weiterer Behandlungsschritte bedürfen, da sie etwa innen beschichtet werden müssen, kann dies in einem stromabwärts hinter dem Behälterherstellungsmodul 70 angeordneten Beschichtungsmodul 72 erfolgen. Allerdings ist ein solches Beschichtungsmodul 72 als optional zu verstehen, ebenso wie ein optionales Trocknungsmodul, das der Trocknung der Behälter dienen kann.

Stromabwärts hinter dem optionalen Beschichtungs- und/oder Trocknungsmodul 72 befindet sich normalerweise ein Füller 74, mit dem die zuvor hergestellten und wahlweise zusätzlich getrockneten und/oder innen beschichteten Kunststoff- oder Zellstoffbehälter mit einer Flüssigkeit, insbesondere mit einem Getränk befüllt werden.

In unmittelbarer Nähe zu diesem Füller 74 kann die dargestellte Getränkeabfüll- und Verpackungsanlage 60 wahlweise mit einem weiteren Modul 76 zur Herstellung von geeigneten Verschlüssen oder Behälterdeckeln ausgestattet sein. Diese Verschlüsse oder Behälterdeckel können wahlweise aus Metall, aus Kunststoff oder auch aus einem geeigneten Zellstoffmaterial hergestellt werden, bspw. aus demselben Material, das auch für die Behälter oder Flaschen verwendet werden kann, sofern es sich nicht um Glasflaschen handelt.

Somit kann es sich bei dem Modul 76 insbesondere um ein Verschlussherstellungsmodul 76 handeln, das mit einem geeigneten Handhabungsmodul verbunden sein kann, welches für das Verschließen der mittels des Füllers 74 befüllten Behälter unter Verwendung der im Modul 76 hergestellten Behälterdeckel sorgen kann.

In Transportrichtung stromabwärts hinter dem zweiten Förderabschnitt 66 und hinter dem (optionalen) Etikettiermodul 68 befinden sich Verpackungs- und Behandlungsmodule für die zuvor fertiggestellten, in den Förderabschnitten 64 und 66 zur Verpackungsmaschine 52 beförderten und vorzugsweise auf dem Transportweg gruppierten Behälter 48. An dieser Stelle kann sich je nach gewünschter Verpackungsvariante etwa ein Umverpackungsmodul 78 zur Ausbildung von Verpackungseinheiten 36 oder Gebinden befinden, welches der Ausstattung der zuvor gebildeten Behältergruppierungen mit passenden Sekundärverpackungen dienen kann.

Das Umverpackungsmodul 78 kann insbesondere für das oben bereits erwähnte Einsetzen der in Fig. 3 gezeigten Behältergruppierungen in die dafür vorgesehenen Kartonumverpackungen 50 vorgesehen sein, um solchermaßen die dort gezeigten Verpackungseinheiten 36 auszubilden, welche wiederum die Stückgüter 10 bilden, die auf der Transportstrecke 14 gemäß Figuren 1A bis 3 befördert werden.

Die solchermaßen im Umverpackungsmodul 78 gebildeten Sekundärverpackungen, Verpackungseinheiten 36 oder Gebinde können wahlweise durch die in Fig. 3 gezeigten Kartonumverpackungen 50, aber wahlweise auch durch Folienverpackungen o. dgl. gebildet sein, mit denen eine definierte Anzahl von gruppierten Behältern umhüllt werden kann. Wahlweise können die Sekundärverpackungen, Verpackungseinheiten 36 oder Gebinde auch durch Getränkekartons oder Getränkekisten aus Kunststoff gebildet sein, in die eine definierte Anzahl von gruppierten Behältern eingefügt werden kann.

Anstelle des hier lediglich beispielhaft genannten Umverpackungsmoduls 78 oder als Bestandteil des Umverpackungsmoduls 78 kann wahlweise auch ein Einschlagmodul zum Umhüllen der Behältergruppierungen mit einer Sekundärverpackung aus Papier oder aus Folie vorgesehen sein. Ebenso könnte das Umverpackungsmodul 78 durch eine Umreifungsstation zur Ausstattung der Behältergruppierungen mit vorgespannten Umreifungsbändern aus Kunststoff oder Papier gebildet sein.

Wahlweise könnte anstelle des erwähnten Umverpackungsmoduls 78, eines anderen Umhüllungsmoduls oder einer Umreifungsstation eine Applikationsstation zur Ausstattung der Behältergruppierungen mit Verpackungszuschnitten vorgesehen sein, wobei solche Verpackungszuschnitte als Sekundärverpackungen angesehen werden können.

Außerdem könnte anstelle des erwähnten Umverpackungsmoduls 78, eines anderen Umhüllungsmoduls oder einer Umreifungsstation eine Applikationsstation zur Ausstattung der Behältergruppierungen mit Klebeverbindungen vorgesehen sein, wodurch Klebegebinde mit mehreren haftend aneinander gefügten Behältern gebildet werden. Auch solche Klebeverbindungen könnten prinzipiell als Variante von Sekundärverpackungen angesehen werden.

Wahlweise könnte zusätzlich zum erwähnten Umverpackungsmodul 78, zu einem anderen Umhüllungsmodul, zu einem Klebemodul oder zu einer Umreifungsstation eine Applikationsstation zur Ausstattung der Behältergruppierungen oder Verpackungseinheiten 36 mit Verpackungszuschnitten vorgesehen sein, wobei solche Verpackungszuschnitte in diesem Fall als Tertiärverpackungen angesehen werden können.

Es sei an dieser Stelle darauf hingewiesen, dass die Anlagendarstellung der Fig. 4 lediglich beispielhaft und keinesfalls einschränkend zu verstehen ist. In der Praxis hat es sich durchaus bewährt, den hier als Umverpackungsmodul 78 bezeichneten Anlagenteil durch mehrere sehr leistungsfähige Handhabungs- und Packstraßen zu realisieren, die in paralleler Verarbeitung mittels mehrerer Roboter eine hohe Anzahl an gleichzeitig handhabbaren Stückgütern 10 oder Verpackungseinheiten 36 zu verarbeiten und umzuverpacken. Diese aufgrund der schematischen Darstellungsweise nicht gezeigten Handhabungsroboter können zudem jeweils mehrere Packköpfe oder Greifköpfe aufweisen, bspw. bis zu sechs oder mehr, die eine entsprechende Anzahl an Stückgutgruppierungen ergreifen, umsetzen und in vorbereitete Umverpackungen einsetzen können.

Dem - ggf. mit mehreren leistungsfähigen und/oder für parallele Verarbeitung vorgesehenen Robotern ausgestatteten - Umverpackungsmodul 78 oder dem alternativ vorgesehenen Verpackungs- oder Behandlungsmodul kann stromabwärts bspw. ein weiteres Behandlungsmodul 80 folgen, das der Nachbehandlung der zuvor hergestellten Verpackungseinheiten 36 (vgl. Fig. 3) dienen kann, um etwa eine zusätzliche Ausstattung anzubringen. Eine solche Ausstattung kann eine Bedruckung oder auch eine zusätzliche Etikettierung o. dgl. sein. Das weitere Behandlungsmodul 80 kann jedoch auch ein sog. Schrumpftunnel zur Wärmebehandlung der zuvor mit unter Wärmeeinwirkung schrumpfbarer Folie umhüllten Behältergruppierungen sein, den die mit Folie umhüllten Behältergruppierungen allesamt durchlaufen, um zu Schrumpffoliengebinden weiterverarbeitet zu werden.

Nach dem Durchlaufen dieses optional zu verstehenden weiteren Behandlungsmoduls 80 werden die Verpackungseinheiten 36 über die sich an das Modul 80 anschließende Fördereinrichtung 82 weiterbefördert. Im gezeigten Ausführungsbeispiel beschreibt die als Horizontalfördereinrichtung ausgebildete Fördereinrichtung 82, die hier auch als dritter Förderabschnitt 82 betrachtet werden kann, eine 180°-Umlenkung und setzt sich in einem geradlinigen Förderabschnitt 84 fort.

Insbesondere im Bereich des dritten Förderabschnittes 82 und/oder des sich daran anschließenden geradlinigen Förderabschnittes 84 kann sich die erfindungsgemäße Transportstrecke 14 (vgl. Figuren 1A bis 3) befinden, weshalb der Bereich des geradlinigen Förderabschnittes 84 zusätzlich mit der Bezugsziffer 14 bezeichnet ist.

Nach der Umlenkung der Fördereinrichtung 82 um 180° und dem geradlinigen Förderabschnitt 84 - vorzugsweise die erfindungsgemäße Transportstrecke 14 enthaltend - folgt ein weiteres Handhabungsmodul 86, das bspw. durch eine Lagenbildungsstation 88 gebildet sein kann. In diesem weiteren Handhabungsmodul 86 bzw. in der Lagenbildungsstation 88 kann insbesondere mit Hilfe von geeigneten Manipulatoren 90 oder Handhabungseinrichtungen, d.h. z.B. mit Greifrobotern, eine Positionierung, Verschiebung und/oder Verdrehung der heranbeförderten Verpackungseinheiten 36 (vgl. Fig. 3) oder Stückgüter 10 (vgl. die Figuren 1A bis 3) zum Zwecke der Lagenbildung erfolgen.

Da diese Manipulatoren 90 oder Greifroboter darauf angewiesen sind, die Positionen der heranbeförderten Stückgüter 10 oder Verpackungseinheiten 36 im Bereich des Moduls bzw. der Lagenbildungsstation 40 exakt zu kennen, ist es von Vorteil, die zunächst lückenlos beförderten Stückgüter 10 oder Verpackungseinheiten 36 in der oben beschriebenen Weise unter Einsatz der erfindungsgemäßen Transportstrecke 14 voneinander zu distanzieren. Sofern die Stückgüter 10 oder Verpackungseinheiten 36 zunächst mit kleineren Lücken auf dem ersten Transportabschnitt 16 (vgl. Figuren 1A bis 2G) oder auf dem ersten Transportband 38 (vgl. Fig. 3) befördert werden, kann es ebenso von Vorteil sein, die Distanzen zwischen den aufeinanderfolgend transportierten Stückgütern 10 oder Verpackungseinheiten 36 in einer Weise zu vergrößern, die es den Manipulatoren 90 erleichtert, Lagenbilder zu erstellen.

Die in der schematischen Darstellung der Fig. 4 lediglich angedeuteten Manipulatoren 90 können vorzugsweise jeweils mit geeigneten Greiferköpfen ausgestattet sein, die hier jedoch nicht näher dargestellt sind. Solche Greiferköpfe, die bspw. an Portalrobotern, an Parallelkinematik-Robotern oder auch an mehrachsig beweglichen Greifarm-Robotern bzw. sog. Knickarmrobotern aufgehängt sein können, welche die Manipulatoren 90 bilden, erfassen die Verpackungseinheiten 36 oder Stückgüter 10 einzeln, paarweise oder in größeren Gruppierungen zur vier oder mehr zusammengeschobenen Verpackungseinheiten 36 oder Stückgütern 10, um sie entweder in eine bereitstehende Tertiärverpackung zu überführen oder um sie in eine Lagenanordnung zur anschließenden Stapelung und Palettierung zu bringen.

Sofern das weitere Handhabungsmodul 86 durch eine Lagenbildungsstation 88 gebildet sein soll, können die zusammengeschobenen Lagen mit den Behältergruppierungen, den Verpackungseinheiten 36 oder Stückgütern 10 nach dem Passieren der Lagenbildungsstation 88 und der dortigen Behandlung durch die Manipulatoren 90 inkl. der Greiferköpfe anschließend zu einer Palettiereinrichtung oder Palettierstation 92 überführt werden, wo aus den zuvor gebildeten Lagen durch Übereinanderstapeln jeweils größere Paletteneinheiten oder Palettenstapel gebildet werden können, was jedoch hier nicht näher gezeigt ist.

Die in Fig. 3 lediglich schematisch angedeuteten und in der zugehörigen Beschreibung nicht näher ausgeführten Handhabungseinrichtungen 56 können gemäß der in Fig. 4 gewählten Systematik somit durch das weitere Handhabungsmodul 86, durch die Lagenbildungsstation 88, durch die Manipulatoren 90 sowie ggf. zusätzlich auch durch die Palettierstation 92 gebildet sein.

Im Unterschied zur Darstellung in der Fig. 4 kann die Palettiereinrichtung oder Palettierstation 92 ggf. als Teil der Verpackungsanlage oder -maschine 52 betrachtet werden, wahlweise jedoch auch als separates, sich an die Verpackungsanlage oder Verpackungsmaschine 52 anschließendes Modul. Je nach gewählter Systematik kann die Lagenbildungsstation 88 mitsamt den ihr zugeordneten Manipulatoren 90 oder Handhabungseinrichtungen als Bestandteil der Palettiereinrichtung oder Palettierstation 92 betrachtet werden, da die Zusammenstellung der Behältergruppierungen, Stückgüter 10 oder Verpackungseinheiten 36 zu stapelbaren Gebindelagen in unmittelbarem Zusammenhang mit der Stapelung, d.h. mit der Palettierung dieser Gebindelagen steht.

Der Palettiereinrichtung oder der Palettierstation 92 kann weiterhin ein Palettentransportmodul 94 zugeordnet sein, mit welchem hierfür jeweils geeignete Paletten heranbefördert werden, um darauf die Palettenlagen für die zu bildenden Palettenstapel ablegen zu können.

Als weiteres optional zu verstehendes Modul, das mit der Palettiereinrichtung oder mit der Palettierstation 92 gekoppelt sein kann, ist ein Zwischenlageneinleger 96 zur Handhabung und zum Positionieren der Zwischenlagen zwischen aufeinanderfolgend abgelegten Palettenlagen zu nennen, der in Fig. 4 als schematisches Element verdeutlicht ist.

Wahlweise kann an vielen Stellen der in der Fig. 4 beispielhaft dargestellten Anlage 60 eine parallele Verarbeitung mit mehreren gleichwirkenden Modulen vorgesehen sein, was bei Hochleistungsanlagen an vielen Stellen sinnvoll ist, um den gewünschten hohen Durchsatz an zu verarbeitenden Stückgütern oder Behältern erreichen zu können. Diese Optionen und Varianten sind im Einzelnen nicht dargestellt oder genannt, sollen jedoch beim Betrachten der Darstellung generell von den obigen Ausführungen mitumfasst sein.

Die zusammenwirkenden Module der Getränkeabfüll- und Verpackungsanlage 60 sind notwendigerweise jeweils mit eigenen Steuermodulen ausgestattet, was hier jedoch nicht zeichnerisch dargestellt ist. Zudem kann eine zentrale Steuerungseinheit vorgesehen sein, die hier jedoch ebenfalls nicht zeichnerisch dargestellt ist. Die Steuermodule der einzelnen Anlagenmodule sowie die zentrale Steuereinheit können jeweils verschiedene Sensorsignale austauschen bzw. als Eingangsgrößen verarbeiten, um daraus Steuersignale für die verschiedenen Anlagenmodule zu generieren.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Stückgut
- 12: Förderrichtung, Transportrichtung
- 14: Transportstrecke
- 16: erster Transportabschnitt
- 18: zweiter Transportabschnitt
- 20: dritter Transportabschnitt
- 22: erste Auflageebene
- 24: zweite Auflageebene
- 26: dritte Auflageebene
- 28: Walze
- 30: Spalt
- 32: Schwerpunkt, Massenschwerpunkt
- 34: Lücke
- 36: Verpackungseinheit
- 38: erstes Transportband
- 40: zweites Transportband
- 42: drittes Transportband
- 44: Schubelement
- 46: Förderebene, horizontale Förderebene
- 48: Getränkebehälter
- 50: Kartonumverpackung
- 52: Verpackungsmaschine, Teilabschnitt einer Verpackungsmaschine
- 54: Verpackungsmodul
- 56: Handhabungseinrichtungen
- 60: Gesamtanlage, Getränkeabfüll- und Verpackungsanlage
- 62: Nassteil
- 64: Förderabschnitt, erster Förderabschnitt
- 66: Förderabschnitt, zweiter Förderabschnitt
- 68: Etikettiermodul
- 70: Behälterherstellungsmodul
- 72: Beschichtungsmodul
- 74: Füller
- 76: weiteres Modul, Verschlussherstellungsmodul
- 78: Umverpackungsmodul
- 80: Behandlungsmodul, weiteres Behandlungsmodul
- 82: Fördereinrichtung, dritter Förderabschnitt
- 84: Förderabschnitt, geradliniger Förderabschnitt
- 86: Handhabungsmodul, weiteres Handhabungsmodul
- 88: Lagenbildungsstation
- 90: Manipulator
- 92: Palettierstation
- 94: Palettentransportmodul
- 96: Zwischenlageneinleger

- 100: Verfahren, Verfahren zur Beförderung von Stückgütern

- v₁: erste Fördergeschwindigkeit
- v₂: zweite Fördergeschwindigkeit
- v₃: dritte Fördergeschwindigkeit

## Patentansprüche

1. Transportstrecke (14) mit mindestens zwei sich in einer Förderrichtung (12) aneinander anschließenden Transportabschnitten (16, 18), die jeweils sich in Förderrichtung (12) bewegende Auflageebenen (22, 24) für Stückgüter (10) bereitstellen, welche Auflageebenen (22, 24) sich zumindest in Nahbereichen eines Anschlusses zwischen den Transportabschnitten (16, 18) unter Ausbildung eines überstumpfen Winkels (α, β) mit einem Wert größer als 180° aneinander anschließen.

2. Transportstrecke (14) nach Anspruch 1, bei der eine erste Auflageebene (22) des ersten Transportabschnittes (16) eine Steigung gegenüber einer Horizontalen aufweist.

3. Transportstrecke (14) nach Anspruch 1, bei welcher die erste Auflageebene (22) des ersten Transportabschnittes (16) in etwa horizontal ausgerichtet ist.

4. Transportstrecke (14) nach einem der Ansprüche 1 bis 3, bei der eine zweite Auflageebene (24) des sich an den ersten Transportabschnitt (16) in Förderrichtung (12) anschließenden zweiten Transportabschnittes (18) ein Gefälle gegenüber einer Horizontalen aufweist.

5. Transportstrecke (14) nach einem der Ansprüche 1 bis 4, bei welcher die erste Auflageebene (22) des ersten Transportabschnittes (16) mit einer ersten Fördergeschwindigkeit (v₁) in Förderrichtung (12) bewegt wird, und bei welcher die zweite Auflageebene (24) des zweiten Transportabschnittes (18) mit einer zweiten Fördergeschwindigkeit (v₂) in Förderrichtung (12) bewegt wird, wobei die zweite Fördergeschwindigkeit (v₂) größer ist als die erste Fördergeschwindigkeit (v₁).

6. Transportstrecke (14) nach Anspruch 5, bei welcher ein Betrag der zweiten Fördergeschwindigkeit (v₂) in etwa 105% bis 120% des Betrags der ersten Fördergeschwindigkeit (v₁) entspricht, wobei die zweite Fördergeschwindigkeit (v₂) insbesondere einen Wert von etwa 110% der ersten Fördergeschwindigkeit (v₁) hat.

7. Transportstrecke (14) nach einem der Ansprüche 1 bis 6, bei der sich zwischen dem ersten Transportabschnitt (16) und dem zweitem Transportabschnitt (18) sich Gleitelement befindet, über das die Stückgüter (10) bei ihrem jeweiligen Übertritt vom ersten Transportabschnitt (16) auf den zweiten Transportabschnitt (18) gleiten können.

8. Transportstrecke (14) nach Anspruch 7, bei welcher das Gleitelement durch eine rotierbare Walze (28) gebildet ist.

9. Transportstrecke (14) nach einem der Ansprüche 1 bis 8, bei welcher sich an den zweiten Transportabschnitt (18) in Förderrichtung (12) ein dritter Transportabschnitt (20) mit einer dritten Auflageebene (26) zur Beförderung der Stückgüter (10) anschließt, wobei die dritte Auflageebene (26) des dritten Transportabschnittes (20) insbesondere horizontal ausgerichtet ist, und wobei sich die dritte Auflageebene (26) insbesondere mit einer dritten Fördergeschwindigkeit (v₃) bewegt, welche dritte Fördergeschwindigkeit (v₃) in etwa mit der zweiten Fördergeschwindigkeit (v₂) übereinstimmt.

10. Verfahren (100) zur Beförderung von Stückgütern (10) mittels mindestens zweier sich in einer Förderrichtung (12) aneinander anschließenden Transportabschnitten (16, 18), auf welchen Transportabschnitten (16, 18) die Stückgüter (10) jeweils auf sich in Förderrichtung (12) bewegenden Auflageebenen (22, 24) befördert werden, wobei die Stückgüter (10) vom ersten Transportabschnitt (16) unter Ausführung einer Nickbewegung auf den sich an den ersten Transportabschnitt (16) unter Ausbildung eines überstumpfen Winkels (α, β) anschließenden zweiten Transportabschnitt (18) übertreten.

11. Verfahren (100) nach Anspruch 10, bei dem die Stückgüter (10) auf der ansteigenden ersten Auflageebene (22) des ersten Transportabschnittes (16) transportiert werden, bevor sie an die abfallende zweite Auflageebene (22) des zweiten Transportabschnittes (18) übertreten.

12. Verfahren (100) nach Anspruch 10, bei dem die Stückgüter (10) auf der horizontal verlaufenden ersten Auflageebene (22) des ersten Transportabschnittes (16) transportiert werden, bevor sie an die abfallende zweite Auflageebene (22) des zweiten Transportabschnittes (18) übertreten.

13. Verfahren (100) nach einem der Ansprüche 10 bis 12, bei dem die Stückgüter (10) auf der zweiten Auflageebene (24) des zweiten Transportabschnittes (18) mit einer höheren Fördergeschwindigkeit (v₂) in Förderrichtung (12) bewegt werden als auf der ersten Auflageebene (22) des zweiten Transportabschnittes (16), auf dem die Stückgüter (10) mit der ersten Fördergeschwindigkeit (v₁) bewegt werden.

14. Verfahren (100) nach Anspruch 13, bei dem eine zweite Fördergeschwindigkeit (v₂) der zweiten Auflageebene (24) in etwa 105% bis 120% des Betrags einer ersten Fördergeschwindigkeit (v₁) der ersten Auflageebene (22) entspricht, wobei die zweite Fördergeschwindigkeit (v₂) insbesondere einen Wert von etwa 110% der ersten Fördergeschwindigkeit (v₁) hat.

15. Verfahren (100) nach einem der Ansprüche 10 bis 14, bei dem sich die Stückgüter (10) beim Übertritt vom ersten Transportabschnitt (16) auf den zweitem Transportabschnitt (18) über ein Gleitelement bewegen, über das die Stückgüter (10) bei ihrem jeweiligen Übertritt vom ersten Transportabschnitt (16) auf den zweiten Transportabschnitt (18) gleiten können.

16. Verfahren (100) nach Anspruch 15, bei das das Gleitelement durch eine rotierbare Walze (28) gebildet ist.

17. Verfahren (100) nach einem der Ansprüche 10 bis 16, bei dem die Stückgüter (10) nach Passieren des zweiten Transportabschnittes (18) auf einen dritten Transportabschnitt (20) mit einer dritten Auflageebene (26) übertreten, auf dem die Stückgüter (10) weiterbefördert werden, wobei die dritte Auflageebene (26) des dritten Transportabschnittes (20) insbesondere horizontal ausgerichtet ist, und wobei sich die dritte Auflageebene (26) insbesondere mit einer dritten Fördergeschwindigkeit (v₃) bewegt, welche dritte Fördergeschwindigkeit (v₃) in etwa mit der zweiten Fördergeschwindigkeit (v₂) übereinstimmt.

18. System mit einer Transportstrecke (14) gemäß einem der Ansprüche 1 bis 9, umfassend mindestens einen Packer und/oder mindestens ein Gruppiersystem und/oder mindestens einen Palettierer.

19. System nach Anspruch 18, das zur Durchführung eines Verfahrens (100) gemäß einem der Ansprüche 10 bis 17 vorgesehen und entsprechend ausgebildet ist, wobei die Stückgüter (10) nach dem Passieren des dritten Transportabschnittes (20) zu einem Packer und/oder zu einem Gruppiersystem und/oder zu einem Palettierer weiterbefördert werden.
